(19) **Europäisches Patentamt / European Patent Office / Office européen des brevets**

(11) **EP 4 651 416 A1**

(12) **EUROPEAN PATENT APPLICATION**
published in accordance with Art. 153(4) EPC

(43) Date of publication:
**19.11.2025 Bulletin 2025/47**

(21) Application number: **23915407.3**

(22) Date of filing: **14.01.2023**

(51) International Patent Classification (IPC):
**H04L 5/00** $^{(2006.01)}$

(52) Cooperative Patent Classification (CPC):
**H04L 5/00**

(86) International application number:
**PCT/CN2023/072222**

(87) International publication number:
**WO 2024/148638 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Stöckeler, Ferdinand et al**
**Schoppe, Zimmermann, Stöckeler Zinkler, Schenk & Partner mbB Patentanwälte**
**Radlkoferstrasse 2**
**81373 München (DE)**

(54) **CHANNEL STATUS INFORMATION REPORTING METHOD AND APPARATUS, AND STORAGE MEDIUM**

(57)    The present disclosure relates to the technical field of communications, and relates to a channel status information (CSI) reporting method and apparatus, and a storage medium, for use in realizing CSI reporting based on an enhanced codebook structure in a medium-high-speed movement scenario. The method comprises: in response to a codebook parameter being configured for a terminal, sending CSI to a network device on the basis of the codebook parameter, wherein the codebook parameter comprises one or more Doppler domain basis vectors and/or the length of the Doppler domain basis vector.

S11

> sending CSI to a network device based on a codebook parameter in response to the terminal being configured with the codebook parameter

FIG. 2

EP 4 651 416 A1

**Description**

**FIELD**

The present disclosure relates to the field of communication technologies, and in particular relates to a method and an apparatus for reporting channel status information (CSI), and a storage medium.

**BACKGROUND**

For a terminal moving at a medium-to-high speed, due to the rapid change of a channel in a time domain, if the Rel-16/17 Type II codebook is used to calculate the precoding of a downlink data transmission within a certain time range, the rapid change of the channel will not match the calculated precoding, resulting in the degradation of a system performance. In order to solve this problem, it is determined in the work item description (WID) of the Rel-18 codebook to enhance the codebook design by introducing Doppler domain basis vectors based on the Rel-16/17 Type II codebook.

However, for the enhanced codebook structure in a medium-to-high-speed movement scenario, how to report CSI is a problem to be solved.

**SUMMARY**

In order to overcome the problems existing in the related art, the present disclosure provides a method and an apparatus for reporting CSI, and a storage medium.

According to a first aspect of embodiments of the present disclosure, there is provided a method for reporting CSI, performed by a terminal and including: sending CSI to a network device based on a codebook parameter in response to the terminal being configured with the codebook parameter, in which the codebook parameter includes one or more Doppler domain basis vectors and/or a length of a Doppler domain basis vector.

In an implementation, the CSI includes first information, and the first information includes at least one of: rank indication information, channel quality indication information, or number indication information of non-zero coefficients of all layers.

In an implementation, the CSI includes second information, the second information includes multiple information groups, and different information groups in the multiple information groups correspond to different priorities; and one or more information groups with lower priorities in the second information are discarded in response to uplink resources allocated by the network device being unable to transmit all information included in the CSI.

In an implementation, the second information includes a first information group, and the first information group includes at least one of: indication information of a Doppler domain basis vector, spatial domain basis vector indication information or CSI-RS port selection indication information in each polarization direction, indication information of a strongest coefficient at each layer, or indication information of a frequency domain basis vector.

In an implementation, the second information further includes a second information group, and the second information group includes at least one of: indication information of a Doppler domain basis vector; indication information of a frequency domain basis vector; position indication information of $vB - \left\lfloor \dfrac{K^{NZ}}{2} \right\rfloor$ bits of high-priority non-zero coefficients; amplitude and phase quantization information corresponding to $\max\left(0, \left\lceil \dfrac{K^{NZ}}{2} \right\rceil - v\right)$ high-priority non-zero coefficients; or coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors, where $v$ represents a transmission rank, $B$ represents an indication size of non-zero coefficients at each layer, $K^{NZ}$ represents a number of non-zero coefficients corresponding to all layers, and $Q$ represents a number of Doppler domain basis vectors.

In an implementation, the second information further includes a third information group, and the third information group includes at least one of: indication information of a Doppler domain basis vector; position indication information of $\left\lfloor \dfrac{K^{NZ}}{2} \right\rfloor$ bits of low-priority non-zero coefficients; amplitude and phase quantization information corresponding to

$$\min\left(K^{NZ} - v, \left\lceil \frac{K^{NZ}}{2} \right\rceil\right)$$ low-priority non-zero coefficients; coefficients and coefficient indication information for $v$ transmission layers corresponding to Doppler domain basis vectors except the first Doppler domain basis vector; or a combination coefficient and coefficient indication information for $v$ transmission layers corresponding to $Q - \left\lfloor \frac{Q}{2} \right\rfloor$ or

$Q - \left\lceil \frac{Q}{2} \right\rceil$ Doppler domain basis vectors, where $K^{NZ}$ represents the number of non-zero coefficients corresponding to all layers, and $Q$ represents the number of Doppler domain basis vectors.

In an implementation, a sorting of priorities of coefficients in the CSI includes: a priority of a coefficient of a layer being higher than a priority of a coefficient corresponding to a spatial domain basis vector/CSI-RS port, which is higher than a priority of a coefficient corresponding to a frequency domain basis vector, which is higher than a priority of a coefficient corresponding to a Doppler domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a frequency domain basis vector/a value of a first preset algorithm corresponding to the index of the frequency domain basis vector in the same layer, the greater the priority of the coefficient; and the smaller an index of a Doppler domain basis vector in the same layer, the greater the priority of the coefficient; or a priority of a coefficient of a layer being higher than a priority of a coefficient corresponding to a spatial domain basis vector/CSI-RS port, which is higher than a priority of a coefficient corresponding to a Doppler domain basis vector, which is higher than a priority of a coefficient corresponding to a frequency domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a Doppler domain basis vector/a value of a second preset algorithm corresponding to the index of the Doppler domain basis vector in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient of a layer being higher than a priority of a coefficient corresponding to a Doppler domain basis vector, which is higher than a priority of a coefficient corresponding to a spatial domain basis vector/CSI-RS port, which is higher than a priority of a coefficient corresponding to a frequency domain basis vector, in which for coefficients at the same position in different layers, the smaller a number of layers, the greater the priority of the coefficient; the smaller an index of a Doppler domain basis vector/a value of a second preset algorithm corresponding to the index of the Doppler domain basis vector in the same layer, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient corresponding to a Doppler domain basis vector being higher than a priority of a coefficient of a layer, which is higher than a priority of a coefficient corresponding to a spatial domain basis vector/CSI-RS port, which is higher than a priority of a coefficient corresponding to a frequency domain basis vector, in which the smaller an index of a Doppler domain basis vector in the same layer, the greater the priority of the coefficient; for coefficients at the same position in different layers, the smaller a number of layers, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient.

In an implementation, in response to the priority of the coefficient of the layer being higher than the priority of the coefficient corresponding to the spatial domain basis vector/CSI-RS port, which is higher than the priority of the coefficient corresponding to the frequency domain basis vector, which is higher than the priority of the coefficient corresponding to the Doppler domain basis vector, the priority of the coefficient is determined based on following formulas:

$$\mathrm{Pri}\left(l, i, f, d\right) = 2 \cdot L \cdot v \cdot M_v \cdot d + 2 \cdot L \cdot v \cdot \pi\left(f\right) + v \cdot i + l;$$

or

$$\mathrm{Pri}\left(l,i,f,d\right)=K_1\cdot v\cdot M\cdot d+K_1\cdot v\cdot f+v\cdot i+l \;,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $v$ represents a transmission rank, $M_v$ represents a number of frequency domain basis vectors, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, $K_1$ represents a number of CSI-RS ports selected by the terminal, and $M$ represents a number of frequency domain basis vectors.

In an implementation, in response to the priority of the coefficient of the layer being higher than the priority of the coefficient corresponding to the spatial domain basis vector/CSI-RS port, which is higher than the priority of the coefficient corresponding to the Doppler domain basis vector, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot\pi\left(f\right)+2\cdot L\cdot v\cdot d+v\cdot i+l \;;$$

or

$$\mathrm{Pri}\left(l,i,f,d\right)=K_1\cdot v\cdot Q\cdot f+K_1\cdot v\cdot d+v\cdot i+l \;;$$

or

$$\mathrm{Pri}\left(l,i,f,d\right)=2\cdot L\cdot v\cdot Q\cdot\pi\left(f\right)+2\cdot L\cdot v\cdot\pi\left(d\right)+v\cdot i+l \;;$$

or

$$\mathrm{Pri}\left(l,i,f,d\right)=K_1\cdot v\cdot Q\cdot f+K_1\cdot v\cdot\pi\left(d\right)+v\cdot i+l \;,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, $\pi\left(d\right)=\min\left(2\cdot n_{4,l}^{(d)},2\cdot\left(N_4-n_{4,l}^{(d)}\right)-1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient of the layer being higher than the priority of the coefficient corresponding to the Doppler domain basis vector, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot \pi\left(f\right)+v\cdot Q\cdot i+v\cdot d+l\;;$$

or

$$\mathrm{Pri}\left(l,i,f,d\right)=K_1\cdot v\cdot Q\cdot f+v\cdot Q\cdot i+v\cdot d+l\;;$$

or

$$\mathrm{Pri}\left(l,i,f,d\right)=2\cdot L\cdot v\cdot Q\cdot \pi\left(f\right)+v\cdot Q\cdot i+v\cdot \pi\left(d\right)+l\;;$$

or

$$\mathrm{Pri}\left(l,i,f,d\right)=K_1\cdot v\cdot Q\cdot f+v\cdot Q\cdot i+v\cdot \pi\left(d\right)+l\;,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, $\pi\left(d\right)=\min\left(2\cdot n_{4,l}^{(d)},2\cdot\left(N_4-n_{4,l}^{(d)}\right)-1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient corresponding to the Doppler domain basis vector being higher than the priority of the coefficient of the layer, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot \pi\left(f\right)+v\cdot Q\cdot i+Q\cdot l+d\;;$$

or

$$\mathrm{Pri}\left(l,i,f,d\right)=K_1\cdot v\cdot Q\cdot f+v\cdot Q\cdot i+Q\cdot l+d\;,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors,

$v$ represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, and $K_1$ represents a number of CSI-RS ports selected by the terminal.

According to a second aspect of embodiments of the present disclosure, there is provided a method for reporting CSI, performed by a network device and including configuring a codebook parameter for a terminal, the codebook parameter including one or more Doppler domain basis vectors and/or a length of a Doppler domain basis vector; and receiving CSI sent by the terminal.

In an implementation, the CSI includes first information, and the first information includes at least one of: rank indication information, channel quality indication information, or number indication information of non-zero coefficients of all layers.

In an implementation, the CSI includes second information, the second information includes multiple information groups, and different information groups in the multiple information groups correspond to different priorities; and one or more information groups with lower priorities in the second information are discarded in response to uplink resources allocated by the network device being unable to transmit all information included in the CSI.

In an implementation, the second information includes a first information group, and the first information group includes at least one of: indication information of a Doppler domain basis vector, spatial domain basis vector indication information or CSI-RS port selection indication information in each polarization direction, indication information of a strongest coefficient at each layer, or indication information of a frequency domain basis vector.

In an implementation, the second information further includes a second information group, and the second information group includes at least one of: indication information of a Doppler domain basis vector; indication information of a frequency domain basis vector; position indication information of $vB-\left\lfloor\dfrac{K^{NZ}}{2}\right\rfloor$ bits of high-priority non-zero coefficients; amplitude and phase quantization information corresponding to $\max\left(0,\left\lceil\dfrac{K^{NZ}}{2}\right\rceil-\upsilon\right)$ high-priority non-zero coefficients; or coefficients and coefficient indication information for $v$ transmission layers corresponding to a first Doppler domain basis vector or $\left\lfloor\dfrac{Q}{2}\right\rfloor$ or $\left\lceil\dfrac{Q}{2}\right\rceil$ Doppler domain basis vectors, where $v$ represents a transmission rank, $B$ represents an indication size of non-zero coefficients at each layer, $K^{NZ}$ represents a number of non-zero coefficients corresponding to all layers, and $Q$ represents a number of Doppler domain basis vectors.

In an implementation, the second information further includes a third information group, and the third information group includes at least one of: indication information of a Doppler domain basis vector; position indication information of $\left\lfloor\dfrac{K^{NZ}}{2}\right\rfloor$ bits of low-priority non-zero coefficients; amplitude and phase quantization information corresponding to $\min\left(K^{NZ}-v,\left\lceil\dfrac{K^{NZ}}{2}\right\rceil\right)$ low-priority non-zero coefficients; coefficients and coefficient indication information for $v$ transmission layers corresponding to Doppler domain basis vectors except the first Doppler domain basis vector; or a combination coefficient and coefficient indication information for $v$ transmission layers corresponding to $Q-\left\lfloor\dfrac{Q}{2}\right\rfloor$ or $Q-\left\lceil\dfrac{Q}{2}\right\rceil$ Doppler domain basis vectors, where $K^{NZ}$ represents the number of non-zero coefficients corresponding to all layers, and $Q$ represents the number of Doppler domain basis vectors.

In an implementation, a sorting of priorities of coefficients in the CSI includes: a priority of a coefficient of a layer being higher than a priority of a coefficient corresponding to a spatial domain basis vector/CSI-RS port, which is higher than a priority of a coefficient corresponding to a frequency domain basis vector, which is higher than a priority of a coefficient corresponding to a Doppler domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a frequency domain basis vector/a value of a first preset algorithm corresponding to the index of the frequency domain basis vector in the same layer, the greater the priority of the coefficient; and the smaller an index of a Doppler domain basis vector in the same layer, the greater the priority of the coefficient; or a priority of a coefficient of a layer being higher than a priority of a coefficient corresponding to a spatial domain basis vector/CSI-RS port, which is higher than a priority of a coefficient corresponding to a Doppler domain basis vector, which is higher than a priority of a coefficient corresponding to a frequency domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a Doppler domain basis vector/a value of a second preset algorithm corresponding to the index of the Doppler domain basis vector in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient of a layer being higher than a priority of a coefficient corresponding to a Doppler domain basis vector, which is higher than a priority of a coefficient corresponding to a spatial domain basis vector/CSI-RS port, which is higher than a priority of a coefficient corresponding to a frequency domain basis vector, in which for coefficients at the same position in different layers, the smaller a number of layers, the greater the priority of the coefficient; the smaller an index of a Doppler domain basis vector/a value of a second preset algorithm corresponding to the index of the Doppler domain basis vector in the same layer, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient corresponding to a Doppler domain basis vector being higher than a priority of a coefficient of a layer, which is higher than a priority of a coefficient corresponding to a spatial domain basis vector/CSI-RS port, which is higher than a priority of a coefficient corresponding to a frequency domain basis vector, in which the smaller an index of a Doppler domain basis vector in the same layer, the greater the priority of the coefficient; for coefficients at the same position in different layers, the smaller a number of layers, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient.

In an implementation, in response to the priority of the coefficient of the layer being higher than the priority of the coefficient corresponding to the spatial domain basis vector/CSI-RS port, which is higher than the priority of the coefficient corresponding to the frequency domain basis vector, which is higher than the priority of the coefficient corresponding to the Doppler domain basis vector, the priority of the coefficient is determined based on following formulas:

$$\mathrm{Pri}\left(l,i,f,d\right) = 2 \cdot L \cdot v \cdot M_v \cdot d + 2 \cdot L \cdot v \cdot \pi\left(f\right) + v \cdot i + l \ ;$$

or

$$\mathrm{Pri}\left(l,i,f,d\right) = K_1 \cdot v \cdot M \cdot d + K_1 \cdot v \cdot f + v \cdot i + l \ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $v$ represents a transmission rank, $M_v$ represents a number of frequency domain basis vectors, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $K_1$ represents a number of CSI-RS ports selected by the terminal, and $M$ represents a number of frequency domain basis vectors.

In an implementation, in response to the priority of the coefficient of the layer being higher than the priority of the coefficient corresponding to the spatial domain basis vector/CSI-RS port, which is higher than the priority of the coefficient corresponding to the Doppler domain basis vector, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + 2 \cdot L \cdot v \cdot d + v \cdot i + l ;$$

or

$$\mathrm{Pri}(l,i,f,d) = K_1 \cdot v \cdot Q \cdot f + K_1 \cdot v \cdot d + v \cdot i + l ;$$

or

$$\mathrm{Pri}(l,i,f,d) = 2 \cdot L \cdot v \cdot Q \cdot \pi(f) + 2 \cdot L \cdot v \cdot \pi(d) + v \cdot i + l ;$$

or

$$\mathrm{Pri}(l,i,f,d) = K_1 \cdot v \cdot Q \cdot f + K_1 \cdot v \cdot \pi(d) + v \cdot i + l ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient of the layer being higher than the priority of the coefficient corresponding to the Doppler domain basis vector, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + v \cdot Q \cdot i + v \cdot d + l ;$$

or

$$\mathrm{Pri}(l,i,f,d) = K_1 \cdot v \cdot Q \cdot f + v \cdot Q \cdot i + v \cdot d + l ;$$

or

$$\mathrm{Pri}\left(l,i,f,d\right)=2\cdot L\cdot v\cdot Q\cdot \pi\left(f\right)+v\cdot Q\cdot i+v\cdot \pi\left(d\right)+l\ ;$$

or

$$\mathrm{Pri}\left(l,i,f,d\right)=K_1\cdot v\cdot Q\cdot f+v\cdot Q\cdot i+v\cdot \pi\left(d\right)+l\ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, $\pi\left(d\right)=\min\left(2\cdot n_{4,l}^{(d)},2\cdot\left(N_4-n_{4,l}^{(d)}\right)-1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient corresponding to the Doppler domain basis vector being higher than the priority of the coefficient of the layer, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot \pi\left(f\right)+v\cdot Q\cdot i+Q\cdot l+d\ ;$$

or

$$\mathrm{Pri}\left(l,i,f,d\right)=K_1\cdot v\cdot Q\cdot f+v\cdot Q\cdot i+Q\cdot l+d\ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, and $K_1$ represents a number of CSI-RS ports selected by the terminal.

According to a third aspect of embodiments of the present disclosure, there is provided an apparatus for reporting CSI, applied to a terminal and including a sending module. The sending module is configured to send CSI to a network device based on a codebook parameter in response to the terminal being configured with the codebook parameter, in which the codebook parameter includes one or more Doppler domain basis vectors and/or a length of a Doppler domain basis vector.

In an implementation, the CSI includes first information, and the first information includes at least one of: rank indication information, channel quality indication information, or number indication information of non-zero coefficients of all layers.

In an implementation, the CSI includes second information, the second information includes multiple information groups, and different information groups in the multiple information groups correspond to different priorities; and one or more information groups with lower priorities in the second information are discarded in response to uplink resources allocated by the network device being unable to transmit all information included in the CSI.

In an implementation, the second information includes a first information group, and the first information group includes at least one of: indication information of a Doppler domain basis vector, spatial domain basis vector indication information or CSI-RS port selection indication information in each polarization direction, indication information of a strongest coefficient at each layer, or indication information of a frequency domain basis vector.

In an implementation, the second information further includes a second information group, and the second information group includes at least one of: indication information of a Doppler domain basis vector; indication information of a frequency domain basis vector; position indication information of $vB - \left\lfloor \dfrac{K^{NZ}}{2} \right\rfloor$ bits of high-priority non-zero coefficients; amplitude and phase quantization information corresponding to $\max\left(0, \left\lceil \dfrac{K^{NZ}}{2} \right\rceil - \upsilon\right)$ high-priority non-zero coefficients; or coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors, where $v$ represents a transmission rank, $B$ represents an indication size of non-zero coefficients at each layer, $K^{NZ}$ represents a number of non-zero coefficients corresponding to all layers, and $Q$ represents a number of Doppler domain basis vectors.

In an implementation, the second information further includes a third information group, and the third information group includes at least one of: indication information of a Doppler domain basis vector; position indication information of $\left\lfloor \dfrac{K^{NZ}}{2} \right\rfloor$ bits of low-priority non-zero coefficients; amplitude and phase quantization information corresponding to $\min\left(K^{NZ} - v, \left\lceil \dfrac{K^{NZ}}{2} \right\rceil\right)$ low-priority non-zero coefficients; coefficients and coefficient indication information for $v$ transmission layers corresponding to Doppler domain basis vectors except the first Doppler domain basis vector; or a combination coefficient and coefficient indication information for $v$ transmission layers corresponding to $Q - \left\lfloor \dfrac{Q}{2} \right\rfloor$ or $Q - \left\lceil \dfrac{Q}{2} \right\rceil$ Doppler domain basis vectors, where $K^{NZ}$ represents the number of non-zero coefficients corresponding to all layers, and $Q$ represents the number of Doppler domain basis vectors.

In an implementation, a sorting of priorities of coefficients in the CSI includes: a priority of a coefficient of a layer being higher than a priority of a coefficient corresponding to a spatial domain basis vector/CSI-RS port, which is higher than a priority of a coefficient corresponding to a frequency domain basis vector, which is higher than a priority of a coefficient corresponding to a Doppler domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a frequency domain basis vector/a value of a first preset algorithm corresponding to the index of the frequency domain basis vector in the same layer, the greater the priority of the coefficient; and the smaller an index of a Doppler domain basis vector in the same layer, the greater the priority of the coefficient; or a priority of a coefficient of a layer being higher than a priority of a coefficient corresponding to a spatial domain basis vector/CSI-RS port, which is higher than a priority of a coefficient corresponding to a Doppler domain basis vector, which is higher than a priority of a coefficient corresponding to a frequency domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a Doppler domain basis vector/a value of a second preset algorithm corresponding to the index of the Doppler domain basis vector in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient of a layer being higher than a priority of a coefficient corresponding to a Doppler domain basis vector, which is higher than a priority of a coefficient corresponding to a spatial domain basis vector/CSI-RS port, which is higher than a priority of a coefficient corresponding to a frequency domain basis vector, in which for coefficients at the same position in different layers, the smaller a number of layers, the greater the priority of the coefficient; the smaller an index of a Doppler domain basis vector/a value of a second preset algorithm corresponding to the index of the Doppler domain basis vector in the same layer, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient corresponding to a Doppler domain basis vector being higher than a priority of a coefficient of a layer, which is higher than a priority of a coefficient corresponding to a spatial domain basis vector/CSI-RS port, which is higher than a priority of a coefficient corresponding to a frequency domain basis vector, in which the smaller an index of a Doppler domain basis vector in the same layer, the greater the priority of the coefficient; for coefficients at the same position in different layers, the smaller a number of layers, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient.

In an implementation, in response to the priority of the coefficient of the layer being higher than the priority of the coefficient corresponding to the spatial domain basis vector/CSI-RS port, which is higher than the priority of the coefficient corresponding to the frequency domain basis vector, which is higher than the priority of the coefficient corresponding to the Doppler domain basis vector, the priority of the coefficient is determined based on following formulas:

$$\mathrm{Pri}(l,i,f,d) = 2 \cdot L \cdot v \cdot M_v \cdot d + 2 \cdot L \cdot v \cdot \pi(f) + v \cdot i + l ;$$

or

$$\mathrm{Pri}(l,i,f,d) = K_1 \cdot v \cdot M \cdot d + K_1 \cdot v \cdot f + v \cdot i + l ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $v$ represents a transmission rank, $M_v$ represents a number of frequency domain basis vectors, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $K_1$ represents a number of CSI-RS ports selected by the terminal, and $M$ represents a number of frequency domain basis vectors.

In an implementation, in response to the priority of the coefficient of the layer being higher than the priority of the coefficient corresponding to the spatial domain basis vector/CSI-RS port, which is higher than the priority of the coefficient corresponding to the Doppler domain basis vector, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + 2 \cdot L \cdot v \cdot d + v \cdot i + l ;$$

or

$$\mathrm{Pri}(l,i,f,d) = K_1 \cdot v \cdot Q \cdot f + K_1 \cdot v \cdot d + v \cdot i + l ;$$

or

$$\mathrm{Pri}\left(l,i,f,d\right)=2\cdot L\cdot v\cdot Q\cdot \pi\left(f\right)+2\cdot L\cdot v\cdot \pi\left(d\right)+v\cdot i+l$$
;

or

$$\mathrm{Pri}\left(l,i,f,d\right)=K_1\cdot v\cdot Q\cdot f+K_1\cdot v\cdot \pi\left(d\right)+v\cdot i+l$$
,

where *l* represents the number of layers, *i* represents the index of the spatial domain basis vector/CSI-RS port, *f* represents the index of the frequency domain basis vector, *d* represents the index of the Doppler domain basis vector, *L* represents a number of spatial domain basis vectors in a polarization direction, *Q* represents a number of Doppler domain basis vectors, *v* represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index *f* of the frequency domain basis vector to $N_3$, $N_3$ represents a number of candidate frequency domain basis vectors, $\pi\left(d\right)=\min\left(2\cdot n_{4,l}^{(d)},2\cdot\left(N_4-n_{4,l}^{(d)}\right)-1\right)$, $n_{4,l}^{(d)}$ represents an index mapped from the index *d* of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient of the layer being higher than the priority of the coefficient corresponding to the Doppler domain basis vector, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot \pi\left(f\right)+v\cdot Q\cdot i+v\cdot d+l$$
;

or

$$\mathrm{Pri}\left(l,i,f,d\right)=K_1\cdot v\cdot Q\cdot f+v\cdot Q\cdot i+v\cdot d+l$$
;

or

$$\mathrm{Pri}\left(l,i,f,d\right)=2\cdot L\cdot v\cdot Q\cdot \pi\left(f\right)+v\cdot Q\cdot i+v\cdot \pi\left(d\right)+l$$
;

or

$$\mathrm{Pri}\left(l,i,f,d\right)=K_1\cdot v\cdot Q\cdot f+v\cdot Q\cdot i+v\cdot \pi\left(d\right)+l$$
,

where *l* represents the number of layers, *i* represents the index of the spatial domain basis vector/CSI-RS port, *f* represents the index of the frequency domain basis vector, *d* represents the index of the Doppler domain basis vector, *L* represents a number of spatial domain basis vectors in a polarization direction, *Q* represents a number of Doppler domain basis vectors, *v* represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index *f* of the frequency domain basis vector to $N_3$, $N_3$ represents a number of candidate frequency

domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient corresponding to the Doppler domain basis vector being higher than the priority of the coefficient of the layer, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + v \cdot Q \cdot i + Q \cdot l + d \; ;$$

or

$$\mathrm{Pri}(l,i,f,d) = K_1 \cdot v \cdot Q \cdot f + v \cdot Q \cdot i + Q \cdot l + d ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, and $K_1$ represents a number of CSI-RS ports selected by the terminal.

According to a fourth aspect of embodiments of the present disclosure, there is provided an apparatus for reporting CSI, applied to a network device and including a configuring module and a receiving module. The configuring module is configured to configure a codebook parameter for a terminal, in which the codebook parameter includes one or more Doppler domain basis vectors and/or a length of a Doppler domain basis vector. The receiving module is configured to receive CSI sent by the terminal.

In an implementation, the CSI includes first information, and the first information includes at least one of: rank indication information, channel quality indication information, or number indication information of non-zero coefficients of all layers.

In an implementation, the CSI includes second information, the second information includes multiple information groups, and different information groups in the multiple information groups correspond to different priorities; and one or more information groups with lower priorities in the second information are discarded in response to uplink resources allocated by the network device being unable to transmit all information included in the CSI.

In an implementation, the second information includes a first information group, and the first information group includes at least one of: indication information of a Doppler domain basis vector, spatial domain basis vector indication information or CSI-RS port selection indication information in each polarization direction, indication information of a strongest coefficient at each layer, or indication information of a frequency domain basis vector.

In an implementation, the second information further includes a second information group, and the second information group includes at least one of: indication information of a Doppler domain basis vector; indication information of a frequency domain basis vector; position indication information of $vB - \left\lfloor \dfrac{K^{NZ}}{2} \right\rfloor$ bits of high-priority non-zero coefficients; amplitude and phase quantization information corresponding to $\max\left(0, \left\lceil \dfrac{K^{NZ}}{2} \right\rceil - v\right)$ high-priority non-zero coefficients; or coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors, where $v$ represents a transmission rank, *B* represents an indication size of non-zero coefficients at each layer, $K^{NZ}$ represents a number of non-zero coefficients corresponding to all layers, and *Q* represents a number of Doppler domain basis vectors.

In an implementation, the second information further includes a third information group, and the third information group includes at least one of: indication information of a Doppler domain basis vector; position indication information of

$$\left\lfloor \frac{K^{NZ}}{2} \right\rfloor$$ bits of low-priority non-zero coefficients; amplitude and phase quantization information corresponding to

$$\min\left( K^{NZ} - v, \left\lceil \frac{K^{NZ}}{2} \right\rceil \right)$$ low-priority non-zero coefficients; coefficients and coefficient indication information for *v* transmission layers corresponding to Doppler domain basis vectors except the first Doppler domain basis vector; or a combination coefficient and coefficient indication information for *v* transmission layers corresponding to $Q - \left\lfloor \frac{Q}{2} \right\rfloor$ or

$Q - \left\lceil \frac{Q}{2} \right\rceil$ Doppler domain basis vectors, where $K^{NZ}$ represents the number of non-zero coefficients corresponding to all layers, and *Q* represents the number of Doppler domain basis vectors.

In an implementation, a sorting of priorities of coefficients in the CSI includes: a priority of a coefficient of a layer being higher than a priority of a coefficient corresponding to a spatial domain basis vector/CSI-RS port, which is higher than a priority of a coefficient corresponding to a frequency domain basis vector, which is higher than a priority of a coefficient corresponding to a Doppler domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a frequency domain basis vector/a value of a first preset algorithm corresponding to the index of the frequency domain basis vector in the same layer, the greater the priority of the coefficient; and the smaller an index of a Doppler domain basis vector in the same layer, the greater the priority of the coefficient; or a priority of a coefficient of a layer being higher than a priority of a coefficient corresponding to a spatial domain basis vector/CSI-RS port, which is higher than a priority of a coefficient corresponding to a Doppler domain basis vector, which is higher than a priority of a coefficient corresponding to a frequency domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a Doppler domain basis vector/a value of a second preset algorithm corresponding to the index of the Doppler domain basis vector in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient of a layer being higher than a priority of a coefficient corresponding to a Doppler domain basis vector, which is higher than a priority of a coefficient corresponding to a spatial domain basis vector/CSI-RS port, which is higher than a priority of a coefficient corresponding to a frequency domain basis vector, in which for coefficients at the same position in different layers, the smaller a number of layers, the greater the priority of the coefficient; the smaller an index of a Doppler domain basis vector/a value of a second preset algorithm corresponding to the index of the Doppler domain basis vector in the same layer, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient corresponding to a Doppler domain basis vector being higher than a priority of a coefficient of a layer, which is higher than a priority of a coefficient corresponding to a spatial domain basis vector/CSI-RS port, which is higher than a priority of a coefficient corresponding to a frequency domain basis vector, in which the smaller an index of a Doppler domain basis vector in the same layer, the greater the priority of the coefficient; for coefficients at the same position in different layers, the smaller a number of layers, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient.

In an implementation, in response to the priority of the coefficient of the layer being higher than the priority of the coefficient corresponding to the spatial domain basis vector/CSI-RS port, which is higher than the priority of the coefficient corresponding to the frequency domain basis vector, which is higher than the priority of the coefficient corresponding to the Doppler domain basis vector, the priority of the coefficient is determined based on following formulas:

$$\mathrm{Pri}\big(l,i,f,d\big)=2\cdot L\cdot v\cdot M_v\cdot d+2\cdot L\cdot v\cdot \pi\big(f\big)+v\cdot i+l\ ;$$

or

$$\mathrm{Pri}\big(l,i,f,d\big)=K_1\cdot v\cdot M\cdot d+K_1\cdot v\cdot f+v\cdot i+l\ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $v$ represents a transmission rank, $M_v$ represents a number of frequency domain basis vectors, $\pi(f)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, $K_1$ represents a number of CSI-RS ports selected by the terminal, and $M$ represents a number of frequency domain basis vectors.

In an implementation, in response to the priority of the coefficient of the layer being higher than the priority of the coefficient corresponding to the spatial domain basis vector/CSI-RS port, which is higher than the priority of the coefficient corresponding to the Doppler domain basis vector, which is higher than the priority of the coefficient corresponding to the frequency domain basis vector, the priority of the coefficient is determined based on following formulas:

$$\mathrm{Pri}\big(l,i,f,d\big)=2\cdot L\cdot v\cdot Q\cdot\pi\big(f\big)+2\cdot L\cdot v\cdot d+v\cdot i+l\ ;$$

or

$$\mathrm{Pri}\big(l,i,f,d\big)=K_1\cdot v\cdot Q\cdot f+K_1\cdot v\cdot d+v\cdot i+l\ ;$$

or

$$\mathrm{Pri}\big(l,i,f,d\big)=2\cdot L\cdot v\cdot Q\cdot\pi\big(f\big)+2\cdot L\cdot v\cdot\pi\big(d\big)+v\cdot i+l\ ;$$

or

$$\mathrm{Pri}\big(l,i,f,d\big)=K_1\cdot v\cdot Q\cdot f+K_1\cdot v\cdot\pi\big(d\big)+v\cdot i+l\ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, $\pi(d)=\min\left(2\cdot n_{4,l}^{(d)},2\cdot\left(N_4-n_{4,l}^{(d)}\right)-1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient of the layer being higher than the priority of the coefficient corresponding to the Doppler domain basis vector, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot \pi\left(f\right)+v\cdot Q\cdot i+v\cdot d+l\ ;$$

or

$$\mathrm{Pri}\left(l,i,f,d\right)=K_1\cdot v\cdot Q\cdot f +v\cdot Q\cdot i+v\cdot d+l\ ;$$

or

$$\mathrm{Pri}\left(l,i,f,d\right)=2\cdot L\cdot v\cdot Q\cdot \pi\left(f\right)+v\cdot Q\cdot i+v\cdot \pi\left(d\right)+l\ ;$$

or

$$\mathrm{Pri}\left(l,i,f,d\right)=K_1\cdot v\cdot Q\cdot f +v\cdot Q\cdot i+v\cdot \pi\left(d\right)+l\ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors,

$v$ represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis

vectors, $\pi\left(d\right)=\min\left(2\cdot n_{4,l}^{(d)},2\cdot\left(N_4-n_{4,l}^{(d)}\right)-1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient corresponding to the Doppler domain basis vector being higher than the priority of the coefficient of the layer, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot \pi\left(f\right)+v\cdot Q\cdot i+Q\cdot l+d\ ;$$

or

$$\mathrm{Pri}\left(l,i,f,d\right)=K_1\cdot v\cdot Q\cdot f +v\cdot Q\cdot i+Q\cdot l+d\ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors,

$v$ represents a transmission rank,

$$\pi(f) = \min\left(2 \cdot n_{3,l}^{(f)}, 2 \cdot \left(N_3 - n_{3,l}^{(f)}\right) - 1\right)$$

, $n_{3,l}^{(f)}$ represents an index mapped from the index $f$ of the frequency domain basis vector to $N_3$, $N_3$ represents a number of candidate frequency domain basis vectors, and $K_1$ represents a number of CSI-RS ports selected by the terminal.

According to a fifth aspect of embodiments of the present disclosure, there is provided a device for reporting CSI, including a processor and a memory for storing instructions executable by the processor, in which the processor is configured to perform the method in the first aspect and any one of its implementations described above.

According to a sixth aspect of embodiments of the present disclosure, there is provided a device for reporting CSI, including a processor and a memory for storing instructions executable by the processor, in which the processor is configured to perform the method in the second aspect and any one of its implementations described above.

According to a seventh aspect of embodiments of the present disclosure, there is provided a storage medium having stored therein instructions that, when executed by a processor of a terminal, cause the terminal to perform the method in the first aspect and any one of its implementations described above.

According to an eighth aspect of embodiments of the present disclosure, there is provided a storage medium having stored therein instructions that, when executed by a processor of a network device, cause the network device to perform the method in the second aspect and any one of its implementations described above.

The technical solution provided in the embodiments of the present disclosure may include the following advantageous effects. When a terminal is in a medium-to-high-speed movement scenario, an enhanced codebook structure needs to be used. At this time, the terminal is configured with a codebook parameter including the number of Doppler domain basis vectors in one or more polarization directions, and sends CSI to the network device based on the codebook parameter, so that the network device can perform corresponding scheduling according to the CSI.

It is to be understood that both the foregoing general description and the following detailed description are illustrative and explanatory only and are not restrictive of the disclosure.

## BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

FIG. 1 is a schematic diagram illustrating a wireless communication system according to an illustrative embodiment.
FIG. 2 is a flow chart illustrating a method for reporting CSI according to an illustrative embodiment.
FIG. 3 is a schematic diagram illustrating the sorting of non-zero coefficients according to an illustrative embodiment.
FIG. 4 is a schematic diagram illustrating the sorting of non-zero coefficients according to an illustrative embodiment.
FIG. 5 is a flow chart illustrating a method for reporting CSI according to an illustrative embodiment.
FIG. 6 is a block diagram illustrating an apparatus for reporting CSI according to an illustrative embodiment.
FIG. 7 is a block diagram illustrating an apparatus for reporting CSI according to an illustrative embodiment.
FIG. 8 is a block diagram illustrating a device for reporting CSI according to an illustrative embodiment.
FIG. 9 is a block diagram illustrating a device for reporting CSI according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure.

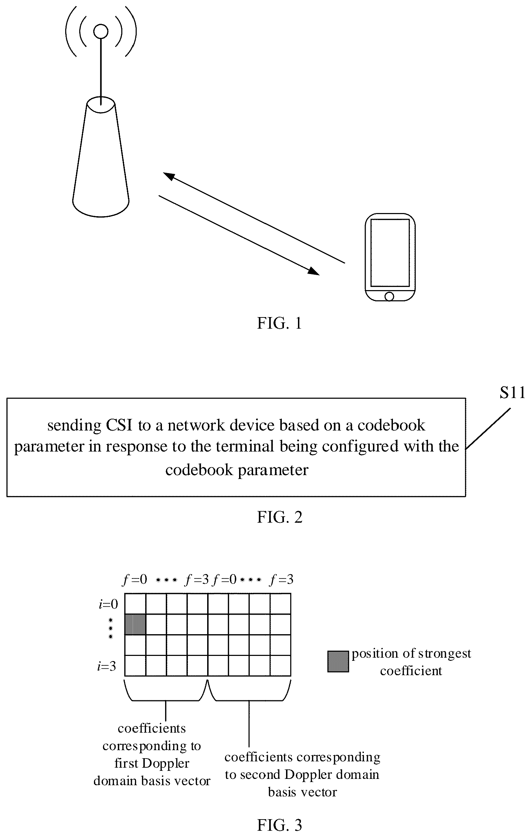

A method for reporting CSI provided in the embodiments of the present disclosure may be performed by a wireless communication system illustrated in FIG. 1. Referring to FIG. 1, the wireless communication system may include a network device and a terminal. The terminal is connected to the network device via wireless resources, and performs data transmissions with the network device via the wireless resources.

It may be understood that the wireless communication system shown in FIG. 1 is only for schematic illustration. The wireless communication system may also include other network devices, such as core network devices, wireless relay devices, and wireless backhaul devices, which are not shown in FIG. 1. The number of network devices and the number of terminals included in the wireless communication system are not limited in the embodiments of the present disclosure.

It may be further understood that the wireless communication system in the embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The networks may be divided into a 2nd generation (2G) network, a 3G network, a 4G network, or a future evolution network, such as a 5th generation wireless communication system (5G) network, which may also be referred to as a new radio (NR) network, according to the capacity, rate, delay, and other factors of different networks. For ease of description, a wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (Wi-Fi) system, a wireless relay node, a wireless backhaul node, a transmission point (TP), a transmission and reception point (TRP), or the like, or may also be a generation NodeB (gNB) in an NR system, or may also be a component or a part of a device that constitutes a base station, or the like. It is to be understood that the specific technology and specific device form adopted by the network device are not limited in the embodiments of the present disclosure. In the present disclosure, the network device may provide communication coverage for a specific geographical area, and may communicate with a terminal located within the coverage area (cell). In addition, the network device may also be a vehicle-mounted device when it is used in a vehicle to everything (V2X) communication system.

Further, the terminal involved in the present disclosure, which may also be referred to as a terminal device, a user equipment (UE), a mobile station (MS), a mobile terminal (MT), or the like, is a device that provides voice and/or data connectivity to a user. For example, the terminal may be a handheld device with a wireless connection function, a vehicle-mounted device, or the like. At present, some examples of the terminal are a smart phone, a customer premise equipment (CPE), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

For a terminal moving at a medium-to-high speed, due to the rapid change of a channel in a time domain, if the Rel-16/17 Type II codebook is used to calculate the precoding of a downlink data transmission within a certain time range, the rapid change of the channel will not match the calculated precoding, resulting in the degradation of a system performance. In order to solve this problem, it is determined in the work item description (WID) of the Rel-18 codebook to enhance the codebook design by introducing Doppler domain basis vectors based on the Rel-16/17 Type II codebook. The enhanced codebook structure may include the following two codebook structures.

Codebook structure 1: when the length $N_4$ of a Doppler domain basis vector is greater than 1, $W = W_1 \tilde{W}_2 (W_f \otimes W_d)^H$.

Codebook structure 2: when the length $N_4$ of a Doppler domain basis vector is equal to 1, for a transmission rank of 1, one $W_1$, ($W_f$ and $W_2$ are reported.

$N_4$ represents the length of the Doppler domain basis vector, $W_1$ represents a matrix composed of $L$ spatial domain basis vectors or $L$ selected channel status information-reference signal (CSI-RS) ports in a polarization direction, $W_f$ represents a matrix composed of $M$ frequency domain basis vectors in a polarization direction, $W_d$ represents a matrix composed of $Q$ Doppler domain basis vectors, $W_2$ represents a matrix composed of combination coefficients, and $W_2$ represents combination coefficients corresponding to the spatial domain basis vectors, frequency domain basis vectors or Doppler domain basis vectors.

In one implementation, the parameters $L, M, Q,$ and $N_4$ are determined by a configuration of the network device.

In the current standard specification, for the Rel-16 Type II codebook or the Rel-17 Type II port selection (PS) codebook, the CSI is reported in two parts: Part 1 and Part 2. The specific contents of Part 1 and Part 2 are shown in Table 1. In addition, Part 2 is divided into three groups, G0, G1 and G2, according to the sorting of priorities of coefficients, spatial domain basis vectors, frequency domain basis vectors, the indication of the strongest coefficient, and the like.

Table 1

| Codebook | Part 1 | Part 2 |
|---|---|---|
| Rel-16 Type II codebook | rank indication (RI) information, channel quality indication (CQI) information, and indication information of the number of non-zero coefficients of all layers | G0: indication information of a spatial domain basis vector in each polarization direction, indication information of the strongest coefficient; G1: frequency domain basis vector indication information, reference amplitude, indication information of high-priority non-zero coefficients, amplitude and phase quantization information corresponding to high-priority non-zero coefficients except the strongest coefficient; G2: indication information of low-priority non-zero coefficients, amplitude and phase quantization information corresponding to low-priority non-zero coefficients. |
| Rel-17 Type II PS codebook | | G0: port selection indication information in each polarization direction, indication information of the strongest coefficient, frequency domain basis vector indication information; G1: indication information of high-priority non-zero coefficients, reference amplitude, amplitude and phase quantization information corresponding to high-priority non-zero coefficients except the strongest coefficient; G2: indication information of low-priority non-zero coefficients, amplitude and phase quantization information corresponding to low-priority non-zero coefficients. |

When uplink resources are limited and the terminal cannot report both Part 1 and Part 2 in the CSI in one report, some contents of the CSI need to be ignored and discarded. In order to ensure a certain performance and reasonably discard some contents of the CSI, the following priority sorting function for the coefficients in the combination coefficient matrix is defined in the Rel-16 Type II codebook or Rel-17 Type II port selection codebook in the current standard specification. The smaller the value of the function, the higher the priority, and vice versa.

The coefficient priority order in the Rel-16 Type II codebook is determined based on the following formula:

$$\mathrm{Pri}(l,i,f) = 2 \cdot L \cdot v \cdot \pi(f) + v \cdot i + l \qquad (1)$$

where $\pi(f) = \min\left(2 \cdot n_{3,l}^{(f)}, 2 \cdot \left(N_3 - n_{3,l}^{(f)}\right) - 1\right)$, $l = 1, 2, ..., v$, $i = 0, 1, ..., 2L-1$, and $f = 0, 1, ..., M_v$-1. $l$ represents the number of layers, $v$ represents the rank, $i$ represents an index of a spatial domain basis vector, $f$ represents an index of a frequency domain basis vector, $L$ represents the number of spatial domain basis vectors in a polarization direction, $M_v$ represents the number of frequency domain basis vectors in a polarization direction, $n_{3,l}^{(f)}$ represents an index mapped from the index $f$ of the frequency domain basis vector to $N_3$, and $N_3$ represents the number of candidate frequency domain basis vectors.

The coefficient priority order in the Rel-17 Type II PS codebook is determined based on the following formula:

$$\mathrm{Pri}(l,i,f) = K_1 \cdot v \cdot f + v \cdot i + l \qquad (2)$$

where $l = 1, 2, ..., v$, $i = 0, 1, ..., K_1$-1, and $f = 0, 1, ..., M$-1. $l$ represents the number of layers, $v$ represents the rank, $i$ represents an index of a port, $f$ represents an index of a frequency domain basis vector, $K_1$ represents the number of CSI-RS ports selected by the terminal, and $M$ represents the number of frequency domain basis vectors.

It should be understood that the smaller the value of Pri($l,i,f$), the greater the priority of the non-zero coefficient.

However, for the enhanced codebook structure in a medium-to-high-speed movement scenario, how to report CSI is a problem to be solved.

Based on this, an embodiment of the present disclosure proposes a method for reporting CSI. When a terminal is in a medium-to-high-speed movement scenario, an enhanced codebook structure needs to be used. At this time, the terminal is configured with a codebook parameter including one or more Doppler domain basis vectors and/or a length of a Doppler domain basis vector, and sends CSI to the network device based on the codebook parameter, so that the network device can perform corresponding scheduling according to the CSI.

FIG. 2 is a flow chart of a method for reporting CSI according to an illustrative embodiment. As shown in FIG. 2, the method for reporting CSI is performed by a terminal, and includes the following steps.

At step S11, CSI is sent to a network device based on a codebook parameter in response to the terminal being configured with the codebook parameter.

In one implementation, the codebook parameter includes one or more Doppler domain basis vectors and/or a length of a Doppler domain basis vector.

In another implementation, the codebook parameter further includes one or more spatial domain basis vectors, and one or more frequency domain basis vectors.

In the embodiments of the present disclosure, when the terminal is in a medium-to-high-speed movement scenario, an enhanced codebook structure needs to be used. At this time, the terminal is configured with a codebook parameter including one or more Doppler domain basis vectors and/or the length of the Doppler domain basis vector, and sends CSI to the network device based on the codebook parameter, so that the network device can perform corresponding scheduling according to the CSI.

In the method for reporting CSI provided in an embodiment of the present disclosure, the CSI may include first information (Part 1), and the size of an indication field corresponding to the first information may be a fixed value. For example, the size of the indication field corresponding to the first information may be a preset size, or a default size specified by a protocol.

In one implementation, the first information includes at least one of: rank indication information, channel quality indication information, or number indication information of non-zero coefficients of all layers.

In the embodiments of the present disclosure, by specifying the indication information in Part 1 of the CSI, the information length of Part 1 can be determined, thereby reducing the detection complexity of the network device.

In the method for reporting CSI provided in an embodiment of the present disclosure, the CSI may further include second information (Part 2), and the size of Part 2 of the CSI is determined based on the information in Part 1.

In one implementation, the second information includes at least one of: indication information of a Doppler domain basis vector, spatial domain basis vector indication information or CSI-RS port selection indication information in each polarization direction, indication information of a strongest coefficient at each layer, indication information of a frequency domain basis vector, position indication information of non-zero coefficients, amplitude and phase quantization information corresponding to non-zero coefficients, or coefficients and coefficient indication information for $v$ transmission layers.

In some embodiments, the second information may include indication information of the Doppler domain basis vector.

The indication information of the Doppler domain basis vector indicates the Doppler domain basis vectors selected by the terminal.

It is worth noting that, when the Doppler domain basis vectors selected by the terminal are all candidate Doppler domain basis vectors, the second information may not include the indication information of the Doppler domain basis vectors.

In some embodiments, when the reporting of the CSI is based on the enhanced Rel-16 Type II codebook, the second information may include spatial domain basis vector indication information in each polarization direction; and when the reporting of the CSI is based on the enhanced Rel-17 Type II port selection codebook, the second information may include CSI-RS port selection indication information in each polarization direction.

The spatial domain basis vector indication information or the CSI-RS port selection indication information indicates a spatial domain basis vector or a CSI-RS port corresponding to a target CSI-RS resource selected by the terminal.

In some embodiments, the second information may include indication information of the strongest coefficient at each layer.

The indication information of the strongest coefficient indicates the position of the strongest coefficient in each layer of non-zero coefficients.

In some embodiments, the second information may include indication information of the frequency domain basis vector.

The indication information of the frequency domain basis vector indicates a frequency domain basis vector selected by the terminal.

In some embodiments, the second information may include position indication information of non-zero coefficients.

The position indication information of non-zero coefficients indicates position indication information of the non-zero coefficients reported by the terminal.

In some embodiments, the second information may include amplitude and phase quantization information corresponding to non-zero coefficients.

In some embodiments, the second information may include coefficients and coefficient indication information for *v* transmission layers.

It is worth noting that the specific contents included in the second information can be determined based on the actual situation. The embodiments of the present disclosure only provide some possible implementations, and the specific contents included in the second information are not limited to the specific information that the second information mentioned in the embodiments of the present disclosure can include.

In the embodiments of the present disclosure, by specifying the indication information in Part 2 of the CSI, the information length of Part 2 can be determined, thereby reducing the detection complexity of the network device.

In the method for reporting CSI provided in an embodiment of the present disclosure, the second information includes multiple information groups, and different information groups in the multiple information groups correspond to different priorities.

In one implementation, one or more information groups with lower priorities in the second information are discarded in response to uplink resources allocated by the network device being unable to transmit all information included in the first information and the second information.

For example, the second information includes three information groups: a first information group, a second information group and a third information group. The priorities of the three information groups are: priority of first information group > priority of second information group > priority of third information group. When the uplink resources allocated by the network device cannot transmit all information included in the first information and the second information, the third information group is preferentially discarded. If the uplink resources are still unable to transmit the information included in the first information and in the first information group and the second information group in the second information, the second information group is discarded, and so on.

In the embodiments of the present disclosure, when the uplink resources allocated by the network device cannot transmit all contents of the CSI, some of the contents of the CSI are discarded while ensuring a certain system performance.

A method for grouping indication information in Part 2 of the CSI will be described below when the CSI is reported based on the enhanced Rel-16 Type II codebook.

Grouping method 1:

In the method for reporting CSI provided in an embodiment of the present disclosure, the second information includes a first information group, and the first information group includes at least one of: indication information of a Doppler domain basis vector, spatial domain basis vector indication information or CSI-RS port selection indication information in each polarization direction, or indication information of a strongest coefficient at each layer.

In the method for reporting CSI provided in an embodiment of the present disclosure, the second information further includes a second information group, and the second information group includes at least one of: indication information of a Doppler domain basis vector, indication information of a frequency domain basis vector, position indication information of $vB - \left\lfloor \dfrac{K^{NZ}}{2} \right\rfloor$ bits of high-priority non-zero coefficients, or amplitude and phase quantization information corresponding to $\max\left(0, \left\lceil \dfrac{K^{NZ}}{2} \right\rceil - \upsilon\right)$ high-priority non-zero coefficients, where *v* represents a transmission rank, $B$ represents an indication size of non-zero coefficients at each layer, and $K^{NZ}$ represents the number of non-zero coefficients corresponding to all layers.

In the method for reporting CSI provided in an embodiment of the present disclosure, the second information further includes a third information group, and the third information group includes at least one of: indication information of a Doppler domain basis vector, position indication information of $\left\lfloor \dfrac{K^{NZ}}{2} \right\rfloor$ bits of low-priority non-zero coefficients, or amplitude and phase quantization information corresponding to $\min\left(K^{NZ} - v, \left\lceil \dfrac{K^{NZ}}{2} \right\rceil\right)$ low-priority non-zero coefficients, where $K^{NZ}$ represents the number of non-zero coefficients corresponding to all layers.

It is worth noting that the indication information of the Doppler domain basis vector can be reported in any information group in the second information, but only one information group can be selected for reporting.

Grouping method 2:

In the method for reporting CSI provided in an embodiment of the present disclosure, the second information at least includes a first information group, and the first information group includes at least one of: spatial domain basis vector indication information or CSI-RS port selection indication information in each polarization direction, or indication information of a strongest coefficient at each layer.

In the method for reporting CSI provided in an embodiment of the present disclosure, the second information at least includes a second information group, and the second information group includes at least one of: indication information of a Doppler domain basis vector, indication information of a frequency domain basis vector, or coefficients and coefficient indication information for $v$ transmission layers corresponding to a first Doppler domain basis vector or

$$\left\lfloor \frac{Q}{2} \right\rfloor \quad \text{or} \quad \left\lceil \frac{Q}{2} \right\rceil \quad \text{Doppler domain basis vectors, where } Q \text{ represents the number of Doppler domain basis vectors.}$$

In the method for reporting CSI provided in an embodiment of the present disclosure, the second information at least includes a third information group, and the third information group includes at least one of: coefficients and coefficient indication information for $v$ transmission layers corresponding to Doppler domain basis vectors except the first Doppler domain basis vector, coefficients and coefficient indication information for $v$ transmission layers corresponding to

$$Q - \left\lfloor \frac{Q}{2} \right\rfloor \quad \text{or} \quad Q - \left\lceil \frac{Q}{2} \right\rceil \quad \text{Doppler domain basis vectors, or indication information of a Doppler domain basis vector,}$$

where $Q$ represents the number of Doppler domain basis vectors.

In the embodiments of the present disclosure, two grouping methods are provided for the indication information in Part 2 of the CSI when the CSI is reported based on the enhanced Rel-16 Type II codebook. Certainly, the actual reporting of the CSI is not limited to the two grouping methods provided in the embodiments of the present disclosure, as long as it meets the actual needs. Therefore, the information length of Part 1 or Part 2 can be determined to reduce the detection complexity of the network device.

A method for grouping indication information in Part 2 of the CSI will be described below when the CSI is reported based on the enhanced Rel-17 Type II port selection codebook.

Grouping method 1:

In the method for reporting CSI provided in an embodiment of the present disclosure, the second information at least includes a first information group, and the first information group includes at least one of: indication information of a Doppler domain basis vector, spatial domain basis vector indication information or CSI-RS port selection indication information in each polarization direction, indication information of a strongest coefficient at each layer, or indication information of a frequency domain basis vector.

In the method for reporting CSI provided in an embodiment of the present disclosure, the second information at least includes a second information group, and the second information group includes at least one of: indication information of a Doppler domain basis vector, position indication information of $vB - \left\lfloor \dfrac{K^{NZ}}{2} \right\rfloor$ bits of high-priority non-zero coefficients, or amplitude and phase quantization information corresponding to $\max\left(0, \left\lceil \dfrac{K^{NZ}}{2} \right\rceil - \upsilon\right)$ high-priority non-zero coefficients, where $v$ represents a transmission rank, $B$ represents an indication size of non-zero coefficients at each layer, $K^{NZ}$ represents the number of non-zero coefficients corresponding to all layers, and $\left\lfloor \dfrac{K^{NZ}}{2} \right\rfloor - v$ represents the number of $\left\lfloor \dfrac{K^{NZ}}{2} \right\rfloor$ high-priority non-zero coefficients except strongest coefficients of $v$ layers.

In the method for reporting CSI provided in an embodiment of the present disclosure, the second information further includes a third information group, and the third information group includes at least one of: indication information of a Doppler domain basis vector, position indication information of $\left\lfloor \dfrac{K^{NZ}}{2} \right\rfloor$ bits of low-priority non-zero coefficients, or amplitude and phase quantization information corresponding to $\min\left( K^{NZ} - v, \left\lceil \dfrac{K^{NZ}}{2} \right\rceil \right)$ low-priority non-zero coefficients, where $K^{NZ}$ represents the number of non-zero coefficients corresponding to all layers.

It is worth noting that the indication information of the Doppler domain basis vector can be reported in any information group in the second information, but only one information group can be selected for reporting.

Grouping method 2:

In the method for reporting CSI provided in an embodiment of the present disclosure, the second information at least includes a first information group, and the first information group includes at least one of: indication information of a frequency domain basis vector, spatial domain basis vector indication information or CSI-RS port selection indication information in each polarization direction, or indication information of a strongest coefficient at each layer.

In the method for reporting CSI provided in an embodiment of the present disclosure, the second information at least includes a second information group, and the second information group includes at least one of: indication information of a Doppler domain basis vector, or coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors, where $Q$ represents the number of Doppler domain basis vectors.

In the method for reporting CSI provided in an embodiment of the present disclosure, the second information at least includes a third information group, and the third information group includes at least one of: coefficients and coefficient indication information for $v$ transmission layers corresponding to Doppler domain basis vectors except the first Doppler domain basis vector, coefficients and coefficient indication information for $v$ transmission layers corresponding to $Q - \left\lfloor \dfrac{Q}{2} \right\rfloor$ or $Q - \left\lceil \dfrac{Q}{2} \right\rceil$ Doppler domain basis vectors, or indication information of a Doppler domain basis vector, where $Q$ represents the number of Doppler domain basis vectors.

In the embodiments of the present disclosure, two grouping methods are provided for the indication information in Part 2 of the CSI when the CSI is reported based on the enhanced Rel-17 Type II port selection codebook. Certainly, the actual reporting of the CSI is not limited to the two grouping methods provided in the embodiments of the present disclosure, as long as it meets the actual needs. Therefore, the information length of Part 1 or Part 2 can be determined to reduce the detection complexity of the network device.

In the above embodiments, different groups in Part 2 of the CSI may involve high-priority and low-priority non-zero coefficients. A method for determining the priorities of the non-zero coefficients will be described below.

In the method for reporting CSI provided in an embodiment of the present disclosure, when the CSI is reported based on the enhanced Rel-16 Type II codebook, the sorting of the priorities of the non-zero coefficients is determined based on one of the following modes.

Mode 1: the priority of a coefficient of a layer is higher than the priority of a coefficient corresponding to a spatial domain basis vector, which is higher than the priority of a coefficient corresponding to a frequency domain basis vector, which is higher than the priority of a coefficient corresponding to a Doppler domain basis vector, where for coefficients at the same position in different layers, the smaller the number of layers, the greater the priority of the coefficient; the smaller an index of a spatial domain basis vector in the same layer, the greater the priority of the coefficient; the smaller a value of a first preset algorithm corresponding to an index of a frequency domain basis vector in the same layer, the greater the priority of the coefficient; and the smaller an index of a Doppler domain basis vector in the same layer, the greater the priority of the coefficient.

In one implementation, the first preset algorithm is: $\pi(f) = \min\left( 2 \cdot n_{3,l}^{(f)}, 2 \cdot \left( N_3 - n_{3,l}^{(f)} \right) - 1 \right)$, where

$n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 1, the coefficients with the smallest spatial domain basis vector index in the first layer are first sorted, and then the coefficients with the smallest spatial domain basis vector index in the second layer are sorted, and so on. After the coefficients with the smallest spatial domain basis vector index in all layers are sorted, the coefficients with the subminimum spatial domain basis vector index in the first layer are sorted, and then the coefficients with the subminimum spatial domain basis vector index in the second layer are sorted, and so on. After all coefficients of all spatial domain basis vectors in all layers are sorted, the coefficients of frequency domain basis vectors in all layers are sorted in an interleaved way. The smaller a value of a first preset algorithm corresponding to an index of a frequency domain basis vector, the greater the priority of the corresponding coefficient. After all coefficients of all frequency domain basis vectors in all layers are sorted, coefficients of Doppler domain basis vectors are sorted. The coefficients with the smallest Doppler domain basis vector index are first sorted, and then the coefficients with the subminimum Doppler domain basis vector index are sorted, until the coefficients of all Doppler domain basis vectors are sorted.

In some embodiments, the priority of the non-zero coefficient is determined based on a following formula:

$$\mathrm{Pri}\left(l,i,f,d\right)=2\cdot L\cdot v\cdot M_v\cdot d+2\cdot L\cdot v\cdot \pi\left(f\right)+v\cdot i+l \qquad (3)$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $v$ represents a transmission rank, $M_v$ represents the number of frequency domain basis vectors, $\pi\left(f\right)=\min\left(2\cdot n_{3,l}^{(f)}, 2\cdot\left(N_3-n_{3,l}^{(f)}\right)-1\right)$, $n_{3,l}^{(f)}$ represents an index mapped from the index $f$ of the frequency domain basis vector to $N_3$, and $N_3$ represents the number of candidate frequency domain basis vectors.

Mode 2: the priority of a coefficient of a layer is higher than the priority of a coefficient corresponding to a spatial domain basis vector, which is higher than the priority of a coefficient corresponding to a Doppler domain basis vector, which is higher than the priority of a coefficient corresponding to a frequency domain basis vector, where for coefficients at the same position in different layers, the smaller the number of layers, the greater the priority of the coefficient; the smaller an index of a spatial domain basis vector in the same layer, the greater the priority of the coefficient; the smaller an index of a Doppler domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi\left(f\right)=\min\left(2\cdot n_{3,l}^{(f)}, 2\cdot\left(N_3-n_{3,l}^{(f)}\right)-1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 2, the coefficients with the smallest spatial domain basis vector index in the first layer are first sorted, and then the coefficients with the smallest spatial domain basis vector index in the second layer are sorted, and so on. After the coefficients with the smallest spatial domain basis vector index in all layers are sorted, the coefficients with the subminimum spatial domain basis vector index in the first layer are sorted, and then the coefficients with the subminimum spatial domain basis vector index in the second layer are sorted, and so on. After all coefficients of all spatial domain basis vectors in all layers are sorted, the coefficients of Doppler domain basis vectors are sorted. The coefficients with the smallest Doppler domain basis vector index are first sorted, and then the coefficients with the subminimum Doppler domain basis vector index are sorted. After the coefficients of all Doppler domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l,i,f,d) = 2 \cdot L \cdot v \cdot Q \cdot \pi(f) + 2 \cdot L \cdot v \cdot d + v \cdot i + l \qquad (4)$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $Q$ represents the number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, and $N_3$ represents the number of candidate frequency domain basis vectors.

Mode 3: the priority of a coefficient of a layer is higher than the priority of a coefficient corresponding to a spatial domain basis vector, which is higher than the priority of a coefficient corresponding to a Doppler domain basis vector, which is higher than the priority of a coefficient corresponding to a frequency domain basis vector, where for coefficients at the same position in different layers, the smaller the number of layers, the greater the priority of the coefficient; the smaller an index of a spatial domain basis vector in the same layer, the greater the priority of the coefficient; the smaller a value of a second preset algorithm corresponding to an index of a Doppler domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In one implementation, the second preset algorithm is: $\pi(d) = \min\left(2 \cdot n_{4,l}^{(d)}, 2 \cdot \left(N_4 - n_{4,l}^{(d)}\right) - 1\right)$, where $n_{4,l}^{(d)}$ represents an index mapped from the index $d$ of the Doppler domain basis vector to $N_4$, and $N_4$ represents the number of candidate Doppler domain basis vectors.

In mode 3, the coefficients with the smallest spatial domain basis vector index in the first layer are first sorted, and then the coefficients with the smallest spatial domain basis vector index in the second layer are sorted, and so on. After the coefficients with the smallest spatial domain basis vector index in all layers are sorted, the coefficients with the subminimum spatial domain basis vector index in the first layer are sorted, and then the coefficients with the subminimum spatial domain basis vector index in the second layer are sorted, and so on. After all coefficients of all spatial domain basis vectors in all layers are sorted, the coefficients of Doppler domain basis vectors are sorted. The coefficients of Doppler domain basis vectors are sorted in an interleaved way according to a value of a second preset algorithm. The smaller the value of the second preset algorithm, the greater the priority of the coefficient of the Doppler domain basis vector. After the coefficients of all Doppler domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l,i,f,d) = 2 \cdot L \cdot v \cdot Q \cdot \pi(f) + 2 \cdot L \cdot v \cdot \pi(d) + v \cdot i + l \qquad (5)$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $Q$ represents the number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents the number of candidate frequency domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, and $N_4$ represents the number of candidate Doppler domain basis vectors.

Mode 4: the priority of a coefficient of a layer is higher than the priority of a coefficient corresponding to a Doppler domain basis vector, which is higher than the priority of a coefficient corresponding to a spatial domain basis vector, which is higher than the priority of a coefficient corresponding to a frequency domain basis vector, where for coefficients at the same position in different layers, the smaller the number of layers, the greater the priority of the coefficient; the smaller an index of a Doppler domain basis vector in the same layer, the greater the priority of the coefficient; the smaller an index of a spatial domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi\left(f\right) = \min\left(2 \cdot n_{3,l}^{(f)}, 2 \cdot \left(N_3 - n_{3,l}^{(f)}\right) - 1\right)$, where

$n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 4, the coefficients with the smallest Doppler domain basis vector index in the first layer are first sorted, and then the coefficients with the smallest Doppler domain basis vector index in the second layer are sorted, and so on. After the coefficients with the smallest Doppler domain basis vector index in all layers are sorted, the coefficients with the subminimum Doppler domain basis vector index in the first layer are sorted, and then the coefficients with the subminimum Doppler domain basis vector index in the second layer are sorted, and so on. After all coefficients of all Doppler domain basis vectors in all layers are sorted, the coefficients of spatial domain basis vectors are sorted. The coefficients with the smallest spatial domain basis vector index are first sorted, and then the coefficients with the subminimum spatial domain basis vector index are sorted. After the coefficients of all spatial domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l, i, f, d\right) = 2 \cdot L \cdot v \cdot Q \cdot \pi\left(f\right) + v \cdot Q \cdot i + v \cdot d + l \qquad (6)$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $Q$ represents the number of Doppler domain basis vectors, $v$ represents a transmission rank, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, and $N_3$ represents the number of candidate frequency domain basis vectors.

Mode 5: the priority of a coefficient of a layer is higher than the priority of a coefficient corresponding to a Doppler domain basis vector, which is higher than the priority of a coefficient corresponding to a spatial domain basis vector, which is higher than the priority of a coefficient corresponding to a frequency domain basis vector, where for coefficients at the same position in different layers, the smaller the number of layers, the greater the priority of the coefficient; the smaller a value of a second preset algorithm corresponding to an index of a Doppler domain basis vector in the same layer, the greater the priority of the coefficient; the smaller an index of a spatial domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi\left(f\right) = \min\left(2 \cdot n_{3,l}^{(f)}, 2 \cdot \left(N_3 - n_{3,l}^{(f)}\right) - 1\right)$, where

$n_{3,l}^{(f)}$ represents an index mapped from the index $f$ of the frequency domain basis vector to $N_3$, $N_3$ represents the number of candidate frequency domain basis vectors, and $l$ represents the number of layers.

In one implementation, the second preset algorithm is: $\pi\left(d\right) = \min\left(2 \cdot n_{4,l}^{(d)}, 2 \cdot \left(N_4 - n_{4,l}^{(d)}\right) - 1\right)$, where

$n_{4,l}^{(d)}$ represents an index mapped from the index $d$ of the Doppler domain basis vector to $N_4$, and $N_4$ represents the

number of candidate Doppler domain basis vectors.

In mode 5, the coefficients of Doppler domain basis vectors in different layers are sorted in an interleaved way. The smaller a value of a second preset algorithm, the greater the priority of a coefficient of a Doppler domain basis vector. After the coefficients of all Doppler domain basis vectors in all layers are sorted, the coefficients of spatial domain basis vectors are sorted. The coefficients with the smallest spatial domain basis vector index are first sorted, and then the coefficients with the subminimum spatial domain basis vector index are sorted. After the coefficients of all spatial domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l,i,f,d) = 2 \cdot L \cdot v \cdot Q \cdot \pi(f) + v \cdot Q \cdot i + v \cdot \pi(d) + l \qquad (7)$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $Q$ represents the number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents the number of candidate frequency domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, and $N_4$ represents the number of candidate Doppler domain basis vectors.

Mode 6: the priority of a coefficient corresponding to a Doppler domain basis vector is higher than the priority of a coefficient of a layer, which is higher than the priority of a coefficient corresponding to a spatial domain basis vector, which is higher than the priority of a coefficient corresponding to a frequency domain basis vector, where the smaller an index of a Doppler domain basis vector in the same layer, the greater the priority of the coefficient; for coefficients at the same position in different layers, the smaller the number of layers, the greater the priority of the coefficient; the smaller an index of a spatial domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 6, the coefficients with the smallest Doppler domain basis vector index in the first layer are first sorted, and then the coefficients with the subminimum Doppler domain basis vector index in the first layer are sorted, and so on. After the coefficients of all Doppler domain basis vectors in the first layer are sorted, the coefficients with the smallest Doppler domain basis vector index in the second layer are sorted, and then the coefficients with the subminimum Doppler domain basis vector index in the second layer are sorted, and so on. After all coefficients of all Doppler domain basis vectors in all layers are sorted, the coefficients of spatial domain basis vectors are sorted. The coefficients with the smallest spatial domain basis vector index are first sorted, and then the coefficients with the subminimum spatial domain basis vector index are sorted. After the coefficients of all spatial domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l,i,f,d) = 2 \cdot L \cdot v \cdot Q \cdot \pi(f) + v \cdot Q \cdot i + Q \cdot l + d \qquad (8)$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $Q$ represents the number of Doppler domain basis vectors, $v$ represents a transmission rank, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, and $N_3$ represents the number of candidate frequency domain basis vectors.

In the embodiments of the present disclosure, by sorting the priorities of the non-zero coefficients, when the uplink resources allocated by the network device cannot transmit all contents of the CSI, some of the contents of the CSI are discarded while ensuring a certain system performance.

In the method for reporting CSI provided in an embodiment of the present disclosure, when the CSI is reported based on the enhanced Rel-17 type II port selection codebook, the sorting of the priorities of the non-zero coefficients is determined based on one of the following modes.

Mode 1: the priority of a coefficient of a layer is higher than the priority of a coefficient corresponding to a CSI-RS port, which is higher than the priority of a coefficient corresponding to a frequency domain basis vector, which is higher than the priority of a coefficient corresponding to a Doppler domain basis vector, where for coefficients at the same position in different layers, the smaller the number of layers, the greater the priority of the coefficient; the smaller an index of a CSI-RS port in the same layer, the greater the priority of the coefficient; the smaller an index of a frequency domain basis vector in the same layer, the greater the priority of the coefficient; and the smaller an index of a Doppler domain basis vector in the same layer, the greater the priority of the coefficient.

In one implementation, the first preset algorithm is: $\pi\left(f\right) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 1, the coefficients with the smallest CSI-RS port index in the first layer are first sorted, and then the coefficients with the smallest CSI-RS port index in the second layer are sorted, and so on. After the coefficients with the smallest CSI-RS port index in all layers are sorted, the coefficients with the subminimum CSI-RS port index in the first layer are sorted, and then the coefficients with the subminimum CSI-RS port index in the second layer are sorted, and so on. After all coefficients of all CSI-RS ports in all layers are sorted, the coefficients of frequency domain basis vectors in all layers are sorted. The smaller an index of a frequency domain basis vector, the greater the priority of the corresponding coefficient. After all coefficients of all frequency domain basis vectors in all layers are sorted, coefficients of Doppler domain basis vectors are sorted. The coefficients with the smallest Doppler domain basis vector index are first sorted, and then the coefficients with the subminimum Doppler domain basis vector index are sorted, until the coefficients of all Doppler domain basis vectors are sorted.

In some embodiments, the priority of the non-zero coefficient is determined based on a following formula:

$$\text{Pri}\left(l, i, f, d\right) = K_1 \cdot v \cdot M \cdot d + K_1 \cdot v \cdot f + v \cdot i + l \qquad (9)$$

where $l$ represents the number of layers, $i$ represents the index of the CSI-RS port, $f$ represents the index of the frequency domain basis vector, $d$ represents the index of the Doppler domain basis vector, $K_1$ represents the number of CSI-RS ports selected by the terminal, $v$ represents a transmission rank, and $M$ represents the number of frequency domain basis vectors.

Mode 2: the priority of a coefficient of a layer is higher than the priority of a coefficient corresponding to a CSI-RS port, which is higher than the priority of a coefficient corresponding to a Doppler domain basis vector, which is higher than the priority of a coefficient corresponding to a frequency domain basis vector, where for coefficients at the same position in different layers, the smaller the number of layers, the greater the priority of the coefficient; the smaller an index of a CSI-RS port in the same layer, the greater the priority of the coefficient; the smaller an index of a Doppler domain basis vector in the same layer, the greater the priority of the coefficient; and the smaller an index of a frequency domain basis vector in the same layer, the greater the priority of the coefficient.

In one implementation, the first preset algorithm is: $\pi\left(f\right) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 2, the coefficients with the smallest CSI-RS port index in the first layer are first sorted, and then the coefficients with the smallest CSI-RS port index in the second layer are sorted, and so on. After the coefficients with the smallest CSI-RS port index in all layers are sorted, the coefficients with the subminimum CSI-RS port index in the first layer are sorted, and then the coefficients with the subminimum CSI-RS port index in the second layer are sorted, and so on. After all coefficients of all CSI-RS ports in all layers are sorted, the coefficients of Doppler domain basis vectors are sorted. The coefficients with the smallest Doppler domain basis vector index are first sorted, and then the coefficients with the subminimum Doppler domain basis vector index are sorted. After the coefficients of all Doppler domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l,i,f,d\right)=K_1\cdot v\cdot Q\cdot f+K_1\cdot v\cdot d+v\cdot i+l \qquad (10)$$

where $l$ represents the number of layers, $i$ represents the index of the CSI-RS port, $f$ represents the index of the frequency domain basis vector, $d$ represents the index of the Doppler domain basis vector, $Q$ represents the number of Doppler domain basis vectors, $v$ represents a transmission rank, and $K_1$ represents the number of CSI-RS ports selected by the terminal.

Mode 3: the priority of a coefficient of a layer is higher than the priority of a coefficient corresponding to a CSI-RS port, which is higher than the priority of a coefficient corresponding to a Doppler domain basis vector, which is higher than the priority of a coefficient corresponding to a frequency domain basis vector, where for coefficients at the same position in different layers, the smaller the number of layers, the greater the priority of the coefficient; the smaller an index of a CSI-RS port in the same layer, the greater the priority of the coefficient; the smaller a value of a second preset algorithm corresponding to an index of a Doppler domain basis vector in the same layer, the greater the priority of the coefficient; and the smaller an index of a frequency domain basis vector in the same layer, the greater the priority of the coefficient.

In one implementation, the first preset algorithm is: $\pi\left(f\right)=\min\left(2\cdot n_{3,l}^{(f)},2\cdot\left(N_3-n_{3,l}^{(f)}\right)-1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In one implementation, the second preset algorithm is: $\pi\left(d\right)=\min\left(2\cdot n_{4,l}^{(d)},2\cdot\left(N_4-n_{4,l}^{(d)}\right)-1\right)$, where $n_{4,l}^{(d)}$ represents an index mapped from the index $d$ of the Doppler domain basis vector to $N_4$, and $N_4$ represents the number of candidate Doppler domain basis vectors.

In mode 3, the coefficients with the smallest CSI-RS port index in the first layer are first sorted, and then the coefficients with the smallest CSI-RS port index in the second layer are sorted, and so on. After the coefficients with the smallest CSI-RS port index in all layers are sorted, the coefficients with the subminimum CSI-RS port index in the first layer are sorted, and then the coefficients with the subminimum CSI-RS port index in the second layer are sorted, and so on. After all coefficients of all CSI-RS ports in all layers are sorted, the coefficients of Doppler domain basis vectors are sorted. The coefficients of Doppler domain basis vectors are sorted in an interleaved way according to a value of a second preset algorithm. The smaller the value of the second preset algorithm, the greater the priority of the coefficient of the Doppler domain basis vector. After the coefficients of all Doppler domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l,i,f,d\right)=K_1\cdot v\cdot Q\cdot f+K_1\cdot v\cdot\pi\left(d\right)+v\cdot i+l \qquad (11)$$

where $l$ represents the number of layers, $i$ represents the index of the CSI-RS port, $f$ represents the index of the frequency domain basis vector, $d$ represents the index of the Doppler domain basis vector, $Q$ represents the number of Doppler domain basis vectors, $v$ represents a transmission rank, $K_1$ represents the number of CSI-RS ports selected by the

terminal, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, and $N_4$ represents the number of candidate Doppler domain basis vectors.

Mode 4: the priority of a coefficient of a layer is higher than the priority of a coefficient corresponding to a Doppler domain basis vector, which is higher than the priority of a coefficient corresponding to a CSI-RS port, which is higher than the priority of a coefficient corresponding to a frequency domain basis vector, where for coefficients at the same position in different layers, the smaller the number of layers, the greater the priority of the coefficient; the smaller an index of a Doppler domain basis vector in the same layer, the greater the priority of the coefficient; the smaller an index of a CSI-RS port in the same layer, the greater the priority of the coefficient; and the smaller an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 4, the coefficients with the smallest Doppler domain basis vector index in the first layer are first sorted, and then the coefficients with the smallest Doppler domain basis vector index in the second layer are sorted, and so on. After the coefficients with the smallest Doppler domain basis vector index in all layers are sorted, the coefficients with the subminimum Doppler domain basis vector index in the first layer are sorted, and then the coefficients with the subminimum Doppler domain basis vector index in the second layer are sorted, and so on. After all coefficients of all Doppler domain basis vectors in all layers are sorted, the coefficients of CSI-RS ports are sorted. The coefficients with the smallest CSI-RS port index are first sorted, and then the coefficients with the subminimum CSI-RS port index are sorted. After the coefficients of all CSI-RS ports are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l, i, f, d) = K_1 \cdot v \cdot Q \cdot f + v \cdot Q \cdot i + v \cdot d + l \qquad (12)$$

where $l$ represents the number of layers, $i$ represents the index of the CSI-RS port, $f$ represents the index of the frequency domain basis vector, $d$ represents the index of the Doppler domain basis vector, $Q$ represents the number of Doppler domain basis vectors, $v$ represents a transmission rank, and $K_1$ represents the number of CSI-RS ports selected by the terminal.

Mode 5: the priority of a coefficient of a layer is higher than the priority of a coefficient corresponding to a Doppler domain basis vector, which is higher than the priority of a coefficient corresponding to a CSI-RS port, which is higher than the priority of a coefficient corresponding to a frequency domain basis vector, where for coefficients at the same position in different layers, the smaller the number of layers, the greater the priority of the coefficient; the smaller a value of a second preset algorithm corresponding to an index of a Doppler domain basis vector in the same layer, the greater the priority of the coefficient; the smaller an index of a CSI-RS port in the same layer, the greater the priority of the coefficient; and the smaller an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In one implementation, the second preset algorithm is: $\pi(d) = \min\left(2 \cdot n_{4,l}^{(d)}, 2 \cdot \left(N_4 - n_{4,l}^{(d)}\right) - 1\right)$, where $n_{4,l}^{(d)}$ represents an index mapped from the index $d$ of the Doppler domain basis vector to $N_4$, and $N_4$ represents the number of candidate Doppler domain basis vectors.

In mode 5, the coefficients of Doppler domain basis vectors in different layers are sorted in an interleaved way. The smaller a value of a second preset algorithm, the greater the priority of a coefficient of a Doppler domain basis vector.

After the coefficients of all Doppler domain basis vectors in all layers are sorted, the coefficients of CSI-RS ports are sorted. The coefficients with the smallest CSI-RS port index are first sorted, and then the coefficients with the subminimum CSI-RS port index are sorted. After the coefficients of all CSI-RS ports are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l,i,f,d) = K_1 \cdot v \cdot Q \cdot f + v \cdot Q \cdot i + v \cdot \pi(d) + l \qquad (13)$$

where $l$ represents the number of layers, $i$ represents the index of the CSI-RS port, $f$ represents the index of the frequency domain basis vector, $d$ represents the index of the Doppler domain basis vector, $Q$ represents the number of Doppler domain basis vectors, $v$ represents a transmission rank, $K_1$ represents the number of CSI-RS ports selected by the terminal, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, and $N_4$ represents the number of candidate Doppler domain basis vectors.

Mode 6: the priority of a coefficient corresponding to a Doppler domain basis vector is higher than the priority of a coefficient of a layer, which is higher than the priority of a coefficient corresponding to a CSI-RS port, which is higher than the priority of a coefficient corresponding to a frequency domain basis vector, where the smaller an index of a Doppler domain basis vector in the same layer, the greater the priority of the coefficient; for coefficients at the same position in different layers, the smaller the number of layers, the greater the priority of the coefficient; the smaller an index of a CSI-RS port in the same layer, the greater the priority of the coefficient; and the smaller an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 6, the coefficients with the smallest Doppler domain basis vector index in the first layer are first sorted, and then the coefficients with the subminimum Doppler domain basis vector index in the first layer are sorted, and so on. After the coefficients of all Doppler domain basis vectors in the first layer are sorted, the coefficients with the smallest Doppler domain basis vector index in the second layer are sorted, and then the coefficients with the subminimum Doppler domain basis vector index in the second layer are sorted, and so on. After all coefficients of all Doppler domain basis vectors in all layers are sorted, the coefficients of CSI-RS ports are sorted. The coefficients with the smallest CSI-RS port index are first sorted, and then the coefficients with the subminimum CSI-RS port index are sorted. After the coefficients of all CSI-RS ports are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l,i,f,d) = K_1 \cdot v \cdot Q \cdot f + v \cdot Q \cdot i + Q \cdot l + d \qquad (14)$$

where $l$ represents the number of layers, $i$ represents the index of the CSI-RS port, $f$ represents the index of the frequency domain basis vector, $d$ represents the index of the Doppler domain basis vector, $Q$ represents the number of Doppler domain basis vectors, $v$ represents a transmission rank, and $K_1$ represents the number of CSI-RS ports selected by the terminal.

In the embodiments of the present disclosure, by sorting the priorities of the non-zero coefficients, when the uplink resources allocated by the network device cannot transmit all contents of the CSI, some of the contents of the CSI are discarded while ensuring a certain system performance.

The method for reporting CSI in the embodiments of the present disclosure is described below in conjunction with specific embodiments.

1. Method for reporting CSI based on enhanced Rel-16 Type II codebook

The codebook parameter configured for the terminal includes: the number of candidate frequency domain basis vectors $N_3 = 13$, the number of frequency domain basis vectors $M_v = 4$, the number of spatial domain basis vectors $L = 2$, and the number of Doppler domain basis vectors $Q = 2$, the length of the Doppler domain basis vector $N_4$ being 4. The terminal determines the transmission rank $v = 2$ according to the selected CSI-RS, the maximum number of non-zero coefficients at each layer $K_0 = 16$, and the terminal selects $K^{NZ} = 32$ non-zero coefficients for reporting. The spatial domain oversampling factor $O_1 = O_2 = 4$, and the number of ports for a CSI-RS resource $2N_1N_2 = 8$.

In one implementation, when the terminal sends CSI to the network device, Part 1 of the CSI includes the following indication information: $\lceil \log_2 v \rceil = 2bits$ indicating the rank selected by the terminal, 4 bits indicating wideband CQI information, 2 bits indicating sub-band differential CQI information, and $\lceil \log_2 2K_0 \rceil = 5bits$ indicating the number of non-zero coefficients of all layers.

Indication information included in each information group in Part 2 of the CSI includes as follows:

The first information group (G0): $\left\lceil \log_2 \left( O_1 O_2 \right) \right\rceil + \left\lceil \log_2 \binom{N_1 N_2}{L_1} \right\rceil = 7bits$ indicating the frequency domain basis vector selected by the terminal, and $\left\lceil \log_2 \left( 2L \right) \right\rceil = 2bits$ or $\left\lceil \log_2 \left( 2LM_vQ \right) \right\rceil = 5bits$ indicating the position of the strongest coefficient at each layer.

The second information group (G1): $\left\lceil \log_2 \binom{N_3 - 1}{M_1 - 1} \right\rceil = 8bits$ indicating the frequency domain basis vectors selected by the terminal, and $\left\lceil \log_2 \binom{N_4}{Q} \right\rceil = 3bits$ or $\left\lceil \log_2 \binom{N_4 - 1}{Q - 1} \right\rceil = 2bits$ indicating the Doppler domain basis vectors selected by the terminal. Assume that an indication size of non-zero coefficients $B = 2L \cdot M_1 \cdot Q$, $vB - \left\lfloor \dfrac{K^{NZ}}{2} \right\rfloor = 48bits$ indicates the position of the non-zero coefficients, and 4 bits indicate quantization information of a reference amplitude, and differential amplitude quantization information and phase quantization information of $\left\lfloor \dfrac{K^{NZ}}{2} \right\rfloor - v = 14$ high-priority non-zero coefficients, where each differential amplitude is quantized by 3 bits, and each phase is quantized by 4 bits.

The third information group (G2): $\left\lfloor \dfrac{K^{NZ}}{2} \right\rfloor = 16bits$ indicating the position of the non-zero coefficients, and differential amplitude quantization information and phase quantization information of $\left\lfloor \dfrac{K^{NZ}}{2} \right\rfloor = 16$ low-priority non-zero coefficients, where each differential amplitude is quantized by 3 bits, and each phase is quantized by 4 bits.

The first coefficient priority sorting method is taken as an example below. The coefficients of layers are first sorted, then the coefficients corresponding to spatial domain basis vectors are sorted, then the coefficients corresponding to frequency domain basis vectors are sorted, and finally the coefficients corresponding to Doppler domain basis vectors are sorted. As shown in FIG. 3, the coefficients corresponding to spatial domain basis vectors in the upper left corner of the first layer are preferentially sorted, then the coefficients corresponding to spatial domain basis vectors in the upper left corner of the second layer are sorted, then the coefficients of the second spatial domain basis vectors in the first column of the first layer are sorted, and then the coefficients of the second spatial domain basis vectors in the first column of the second layer are sorted. In this order, after the coefficients of all spatial domain basis vectors of all layers are sorted, the non-zero coefficients of frequency domain basis vectors are sorted in an interleaved way using a first preset algorithm, where the smaller the value of the first preset algorithm, the greater the corresponding priority. Finally, the coefficients of two Doppler domain basis vectors are sorted.

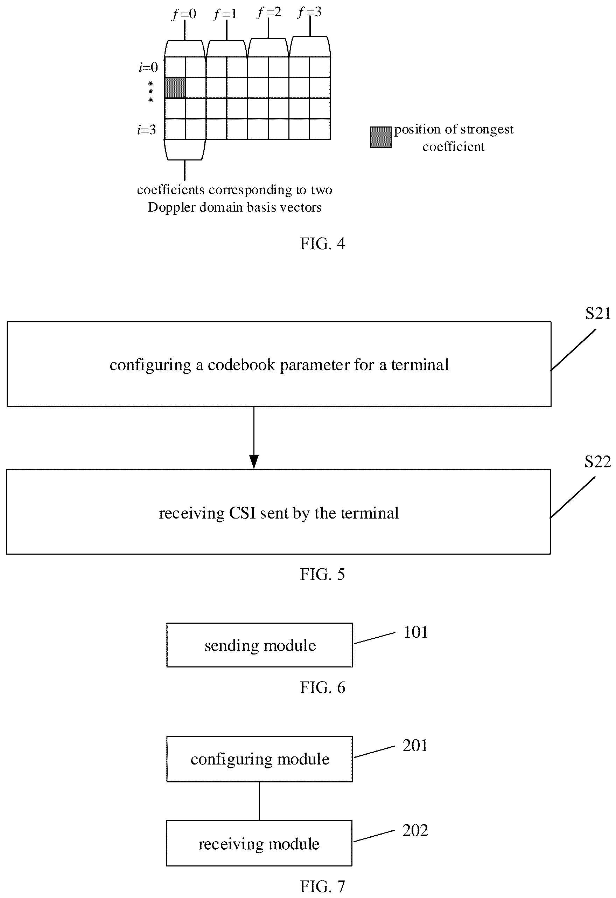

The second coefficient priority sorting method is taken as an example below. The coefficients of layers are first sorted, then the coefficients corresponding to spatial domain basis vectors are sorted, then the coefficients corresponding to Doppler domain basis vectors are sorted, and finally the coefficients corresponding to frequency domain basis vectors are sorted. As shown in FIG. 4, the coefficients corresponding to spatial domain basis vectors in the upper left corner of the first layer are preferentially sorted, then the coefficients corresponding to spatial domain basis vectors in the upper left corner of the second layer are sorted, then the coefficients of the second spatial domain basis vectors in the first column of the first layer are sorted, and then the coefficients of the second spatial domain basis vectors in the first column of the second layer are sorted. In this order, after the coefficients of all spatial domain basis vectors of all layers are sorted, the coefficients of Doppler domain basis vectors are sorted according to indexes of the Doppler domain basis vectors. After the coefficients of all Doppler domain basis vectors are sorted, the non-zero coefficients of frequency domain basis vectors are finally sorted in an interleaved way using a first preset algorithm, where the smaller the value of the first preset algorithm, the greater the corresponding priority.

### 2. Method for reporting CSI based on enhanced Rel-17 Type II port selection codebook

The codebook parameter configured for the terminal includes: the number of candidate frequency domain basis vectors $N_3 = 13$, the number of frequency domain basis vectors $M_v = 4$, the number of CSI-RS ports $L = 2$, and the number of Doppler domain basis vectors $Q = 2$, the length of the Doppler domain basis vector $N_4$ being 4. The terminal determines the transmission rank $v = 2$ according to the selected CSI-RS, the maximum number of non-zero coefficients at each layer $K_0 = 4$, and the terminal selects $K^{NZ} = 8$ non-zero coefficients for reporting. The number of the selected CSI-RS ports $\alpha=1$, that is, $L = 4$, $K_1 = 8$.

In one implementation, when the terminal sends CSI to the network device, Part 1 of the CSI includes the following indication information: $\left\lceil \log_2 v \right\rceil = 2bits$ indicating the rank selected by the terminal, 4 bits indicating wideband CQI information, 2 bits indicating sub-band differential CQI information, and $\left\lceil \log_2 2K_0 \right\rceil = 5bits$ indicating the number of non-zero coefficients of all layers.

Indication information included in each information group in Part 2 of the CSI includes as follows:

The first information group $\left\lceil \log_2 \left( \alpha \cdot 2N_1 N_2 \cdot M \right) \right\rceil = 3bits$ indicating the position of the strongest coefficient at each layer, and $\left\lceil \log_2 \dbinom{N_4}{Q} \right\rceil = 3bits$ or $\left\lceil \log_2 \dbinom{N_4 - 1}{Q - 1} \right\rceil = 2bits$ indicating the Doppler domain basis vector selected by the terminal.

The second information group (G1): $(G1): \quad K_1 \cdot v \cdot M - \left\lfloor \dfrac{K^{NZ}}{2} \right\rfloor = 4bits$ indicating the position of the non-zero coefficients, and 4 bits indicating quantization information of a reference amplitude, and differential amplitude quantization information and phase quantization information of $\left\lfloor \dfrac{K^{NZ}}{2} \right\rfloor - v = 2$ high-priority non-zero coefficients, where each differential amplitude is quantized by 3 bits, and each phase is quantized by 4 bits.

The third information group (G2): $\left\lfloor \dfrac{K^{NZ}}{2} \right\rfloor = 4bits$ indicating the position of the non-zero coefficients, and differential amplitude quantization information and phase quantization information of $\left\lfloor \dfrac{K^{NZ}}{2} \right\rfloor = 4$ low-priority non-zero coefficients, where each differential amplitude is quantized by 3 bits, and each phase is quantized by 4 bits.

Regarding the method for sorting the priorities of the non-zero coefficients, reference may be made to the sorting method described in the above embodiments, which will not be described in detail here.

In the embodiments of the present disclosure, the method for reporting CSI by a terminal, the method for grouping Part 2 of the CSI by the terminal, and the method for sorting priorities of non-zero coefficients by the terminal are proposed when the terminal is configured with a Doppler domain basis vector and/or the length of a Doppler domain basis vector, so that the information length of Part 1 or Part 2 can be determined to reduce the detection complexity of the network device. According to the sorting of the priorities of the non-zero coefficients, the discarding of the CSI can be achieved while ensuring a certain performance.

FIG. 5 is a flow chart of a method for reporting CSI according to an illustrative embodiment. As shown in FIG. 5, the method for reporting CSI is performed by a network device, and includes the following steps.

At step S21, a codebook parameter is configured for a terminal.

The codebook parameter includes one or more Doppler domain basis vectors and/or a length of a Doppler domain basis vector.

At step S22, CSI sent by the terminal is received.

In an implementation, the codebook parameter further includes one or more spatial domain basis vectors, and one or more frequency domain basis vectors.

In the embodiments of the present disclosure, when the terminal is in a medium-to-high-speed movement scenario, an enhanced codebook structure needs to be used. At this time, the terminal is configured with a codebook parameter including one or more Doppler domain basis vectors and/or the length of the Doppler domain basis vector, and sends CSI to the network device based on the codebook parameter, so that the network device can perform corresponding scheduling according to the CSI.

In the method for reporting CSI provided in an embodiment of the present disclosure, the CSI may include first information (Part 1), and the size of an indication field corresponding to the first information may be a fixed value. For example, the size of the indication field corresponding to the first information may be a preset size, or a default size specified by a protocol.

In one implementation, the first information includes at least one of: rank indication information, channel quality indication information, or number indication information of non-zero coefficients of all layers.

In the embodiments of the present disclosure, by specifying the indication information in Part 1 of the CSI, the information length of Part 1 can be determined, thereby reducing the detection complexity of the network device.

In the method for reporting CSI provided in an embodiment of the present disclosure, the CSI may further include second information (Part 2), and the size of Part 2 of the CSI is determined based on the information in Part 1.

In one implementation, the second information includes at least one of: indication information of a Doppler domain basis vector, spatial domain basis vector indication information or CSI-RS port selection indication information in each polarization direction, indication information of a strongest coefficient at each layer, indication information of a frequency domain basis vector, position indication information of non-zero coefficients, amplitude and phase quantization information corresponding to non-zero coefficients, or coefficients and coefficient indication information for $v$ transmission layers.

In some embodiments, the second information may include indication information of the Doppler domain basis vector.

The indication information of the Doppler domain basis vector indicates the Doppler domain basis vectors selected by the terminal.

It is worth noting that, when the Doppler domain basis vectors selected by the terminal are all candidate Doppler domain basis vectors, the second information may not include the indication information of the Doppler domain basis vectors.

In some embodiments, when the reporting of the CSI is based on the enhanced Rel-16 Type II codebook, the second information may include spatial domain basis vector indication information in each polarization direction; and when the reporting of the CSI is based on the enhanced Rel-17 Type II port selection codebook, the second information may include CSI-RS port selection indication information in each polarization direction.

The spatial domain basis vector indication information or the CSI-RS port selection indication information indicates a spatial domain basis vector or a CSI-RS port corresponding to a target CSI-RS resource selected by the terminal.

In some embodiments, the second information may include indication information of the strongest coefficient at each layer.

The indication information of the strongest coefficient indicates the position of the strongest coefficient in each layer of non-zero coefficients.

In some embodiments, the second information may include indication information of the frequency domain basis vector.

The indication information of the frequency domain basis vector indicates a frequency domain basis vector selected by the terminal.

In some embodiments, the second information may include position indication information of non-zero coefficients.

The position indication information of non-zero coefficients indicates position indication information of the non-zero coefficients reported by the terminal.

In some embodiments, the second information may include amplitude and phase quantization information corresponding to non-zero coefficients.

In some embodiments, the second information may include coefficients and coefficient indication information for *v* transmission layers.

It is worth noting that the specific contents included in the second information can be determined based on the actual situation. The embodiments of the present disclosure only provide some possible implementations, and the specific contents included in the second information are not limited to the specific information that the second information mentioned in the embodiments of the present disclosure can include.

In the embodiments of the present disclosure, by specifying the indication information in Part 2 of the CSI, the information length of Part 2 can be determined, thereby reducing the detection complexity of the network device.

In the method for reporting CSI provided in an embodiment of the present disclosure, the second information includes multiple information groups, and different information groups in the multiple information groups correspond to different priorities.

In one implementation, the terminal may discard one or more information groups with lower priorities in the second information in response to uplink resources allocated by the network device being unable to transmit all information included in the first information and the second information.

For example, the second information includes three information groups: a first information group, a second information group and a third information group. The priorities of the three information groups are: priority of first information group > priority of second information group > priority of third information group. When the uplink resources allocated by the network device cannot transmit all information included in the first information and the second information, the third information group is preferentially discarded. If the uplink resources are still unable to transmit the information included in the first information and in the first information group and the second information group in the second information, the second information group is discarded, and so on.

In the embodiments of the present disclosure, when the uplink resources allocated by the network device cannot transmit all contents of the CSI, some of the contents of the CSI are discarded while ensuring a certain system performance.

A method for grouping indication information in Part 2 of the CSI will be described below when the CSI is reported based on the enhanced Rel-16 Type II codebook.

Grouping method 1:

In the method for reporting CSI provided in an embodiment of the present disclosure, the second information includes a first information group, and the first information group includes at least one of: indication information of a Doppler domain basis vector, spatial domain basis vector indication information or CSI-RS port selection indication information in each polarization direction, or indication information of a strongest coefficient at each layer.

In the method for reporting CSI provided in an embodiment of the present disclosure, the second information further includes a second information group, and the second information group includes at least one of: indication information of a Doppler domain basis vector, indication information of a frequency domain basis vector, position indication

information of $vB - \left\lfloor \dfrac{K^{NZ}}{2} \right\rfloor$ bits of high-priority non-zero coefficients, or amplitude and phase quantization information corresponding to $\max\left(0, \left\lceil \dfrac{K^{NZ}}{2} \right\rceil - v\right)$ high-priority non-zero coefficients, where $v$ represents a transmission rank, $B$ represents an indication size of non-zero coefficients at each layer, and $K^{NZ}$ represents the number of non-zero coefficients corresponding to all layers.

In the method for reporting CSI provided in an embodiment of the present disclosure, the second information further includes a third information group, and the third information group includes at least one of: indication information of a Doppler domain basis vector, position indication information of $\left\lfloor \dfrac{K^{NZ}}{2} \right\rfloor$ bits of low-priority non-zero coefficients, or amplitude and phase quantization information corresponding to $\min\left(K^{NZ} - v, \left\lceil \dfrac{K^{NZ}}{2} \right\rceil\right)$ low-priority non-zero coefficients, where $K^{NZ}$ represents the number of non-zero coefficients corresponding to all layers.

It is worth noting that the indication information of the Doppler domain basis vector can be reported in any information group in the second information, but only one information group can be selected for reporting.

Grouping method 2:

In the method for reporting CSI provided in an embodiment of the present disclosure, the second information at least includes a first information group, and the first information group includes at least one of: spatial domain basis vector indication information or CSI-RS port selection indication information in each polarization direction, or indication information of a strongest coefficient at each layer.

In the method for reporting CSI provided in an embodiment of the present disclosure, the second information at least includes a second information group, and the second information group includes at least one of: indication information of a Doppler domain basis vector, indication information of a frequency domain basis vector, or coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors, where $Q$ represents the number of Doppler domain basis vectors.

In the method for reporting CSI provided in an embodiment of the present disclosure, the second information at least includes a third information group, and the third information group includes at least one of: coefficients and coefficient indication information for $v$ transmission layers corresponding to Doppler domain basis vectors except the first Doppler domain basis vector, coefficients and coefficient indication information for $v$ transmission layers corresponding to $Q - \left\lfloor \dfrac{Q}{2} \right\rfloor$ or $Q - \left\lceil \dfrac{Q}{2} \right\rceil$ Doppler domain basis vectors, or indication information of a Doppler domain basis vector, where $Q$ represents the number of Doppler domain basis vectors.

In the embodiments of the present disclosure, two grouping methods are provided for the indication information in Part 2 of the CSI when the CSI is reported based on the enhanced Rel-16 Type II codebook. Certainly, the actual reporting of the CSI is not limited to the two grouping methods provided in the embodiments of the present disclosure, as long as it meets the actual needs. Therefore, the information length of Part 1 or Part 2 can be determined to reduce the detection complexity of the network device.

A method for grouping indication information in Part 2 of the CSI will be described below when the CSI is reported based on the enhanced Rel-17 Type II port selection codebook.

Grouping method 1:

In the method for reporting CSI provided in an embodiment of the present disclosure, the second information at least includes a first information group, and the first information group includes at least one of: indication information of a Doppler domain basis vector, spatial domain basis vector indication information or CSI-RS port selection indication information in each polarization direction, indication information of a strongest coefficient at each layer, or indication information of a frequency domain basis vector.

In the method for reporting CSI provided in an embodiment of the present disclosure, the second information at least includes a second information group, and the second information group includes at least one of: indication information of a Doppler domain basis vector, position indication information of $vB - \left\lfloor \dfrac{K^{NZ}}{2} \right\rfloor$ bits of high-priority non-zero coefficients, or amplitude and phase quantization information corresponding to $\max\left(0, \left\lceil \dfrac{K^{NZ}}{2} \right\rceil - v\right)$ high-priority non-zero coefficients, where $v$ represents a transmission rank, $B$ represents an indication size of non-zero coefficients at each layer, $K^{NZ}$ represents the number of non-zero coefficients corresponding to all layers, and $\left\lfloor \dfrac{K^{NZ}}{2} \right\rfloor - v$ represents the number of $\left\lfloor \dfrac{K^{NZ}}{2} \right\rfloor$ high-priority non-zero coefficients except strongest coefficients of $v$ layers.

In the method for reporting CSI provided in an embodiment of the present disclosure, the second information further includes a third information group, and the third information group includes at least one of: indication information of a Doppler domain basis vector, position indication information of $\left\lfloor \dfrac{K^{NZ}}{2} \right\rfloor$ bits of low-priority non-zero coefficients, or amplitude and phase quantization information corresponding to $\min\left(K^{NZ} - v, \left\lceil \dfrac{K^{NZ}}{2} \right\rceil\right)$ low-priority non-zero coefficients, where $K^{NZ}$ represents the number of non-zero coefficients corresponding to all layers.

It is worth noting that the indication information of the Doppler domain basis vector can be reported in any information group in the second information, but only one information group can be selected for reporting.

Grouping method 2:

In the method for reporting CSI provided in an embodiment of the present disclosure, the second information at least includes a first information group, and the first information group includes at least one of: indication information of a frequency domain basis vector, spatial domain basis vector indication information or CSI-RS port selection indication information in each polarization direction, or indication information of a strongest coefficient at each layer.

In the method for reporting CSI provided in an embodiment of the present disclosure, the second information at least includes a second information group, and the second information group includes at least one of: indication information of a Doppler domain basis vector, or coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors, where $Q$ represents the number of Doppler domain basis vectors.

In the method for reporting CSI provided in an embodiment of the present disclosure, the second information at least includes a third information group, and the third information group includes at least one of: coefficients and coefficient indication information for $v$ transmission layers corresponding to Doppler domain basis vectors except the first Doppler domain basis vector, coefficients and coefficient indication information for $v$ transmission layers corresponding to $Q - \left\lfloor \dfrac{Q}{2} \right\rfloor$ or $Q - \left\lceil \dfrac{Q}{2} \right\rceil$ Doppler domain basis vectors, or indication information of a Doppler domain basis vector, where $Q$ represents the number of Doppler domain basis vectors.

In the embodiments of the present disclosure, two grouping methods are provided for the indication information in Part 2 of the CSI when the CSI is reported based on the enhanced Rel-17 Type II port selection codebook. Certainly, the actual reporting of the CSI is not limited to the two grouping methods provided in the embodiments of the present disclosure, as long as it meets the actual needs. Therefore, the information length of Part 1 or Part 2 can be determined to reduce the detection complexity of the network device.

In the above embodiments, different groups in Part 2 of the CSI may involve high-priority and low-priority non-zero coefficients. A method for determining the priorities of the non-zero coefficients will be described below.

In the method for reporting CSI provided in an embodiment of the present disclosure, when the CSI is reported based on the enhanced Rel-16 Type II codebook, the priority of the non-zero coefficient is determined based on one of the following modes.

Mode 1: the priority of a coefficient of a layer is higher than the priority of a coefficient corresponding to a spatial domain basis vector, which is higher than the priority of a coefficient corresponding to a frequency domain basis vector, which is higher than the priority of a coefficient corresponding to a Doppler domain basis vector, where for coefficients at the same position in different layers, the smaller the number of layers, the greater the priority of the coefficient; the smaller an index of a spatial domain basis vector in the same layer, the greater the priority of the coefficient; the smaller a value of a first preset algorithm corresponding to an index of a frequency domain basis vector in the same layer, the greater the priority of the coefficient; and the smaller an index of a Doppler domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 1, the coefficients with the smallest spatial domain basis vector index in the first layer are first sorted, and then the coefficients with the smallest spatial domain basis vector index in the second layer are sorted, and so on. After the coefficients with the smallest spatial domain basis vector index in all layers are sorted, the coefficients with the subminimum spatial domain basis vector index in the first layer are sorted, and then the coefficients with the subminimum spatial domain basis vector index in the second layer are sorted, and so on. After all coefficients of all spatial domain basis vectors in all layers are sorted, the coefficients of frequency domain basis vectors in all layers are sorted in an interleaved way. The smaller a value of a first preset algorithm corresponding to an index of a frequency domain basis vector, the greater the priority of the corresponding coefficient. After all coefficients of all frequency domain basis vectors in all layers are sorted, coefficients of Doppler domain basis vectors are sorted. The coefficients with the smallest Doppler domain basis vector index are first sorted, and then the coefficients with the subminimum Doppler domain basis vector index are sorted, until the coefficients of all Doppler domain basis vectors are sorted.

In some embodiments, the priority of the non-zero coefficient is determined based on a following formula:

$$\mathrm{Pri}(l,i,f,d) = 2 \cdot L \cdot v \cdot M_v \cdot d + 2 \cdot L \cdot v \cdot \pi(f) + v \cdot i + l$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $v$ represents a transmission rank, $M_v$ represents the number of frequency domain basis vectors, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, and $N_3$ represents the number of candidate frequency domain basis vectors.

Mode 2: the priority of a coefficient of a layer is higher than the priority of a coefficient corresponding to a spatial domain basis vector, which is higher than the priority of a coefficient corresponding to a Doppler domain basis vector, which is higher than the priority of a coefficient corresponding to a frequency domain basis vector, where for coefficients at the same position in different layers, the smaller the number of layers, the greater the priority of the coefficient; the smaller an index of a spatial domain basis vector in the same layer, the greater the priority of the coefficient; the smaller an index of a Doppler domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 2, the coefficients with the smallest spatial domain basis vector index in the first layer are first sorted, and then the coefficients with the smallest spatial domain basis vector index in the second layer are sorted, and so on. After the coefficients with the smallest spatial domain basis vector index in all layers are sorted, the coefficients with the subminimum spatial domain basis vector index in the first layer are sorted, and then the coefficients with the subminimum spatial domain basis vector index in the second layer are sorted, and so on. After all coefficients of all spatial domain basis vectors in all layers are sorted, the coefficients of Doppler domain basis vectors are sorted. The coefficients with the smallest Doppler domain basis vector index are first sorted, and then the coefficients with the subminimum Doppler domain basis vector index are sorted. After the coefficients of all Doppler domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l,i,f,d) = 2\cdot L\cdot v\cdot Q\cdot \pi(f) + 2\cdot L\cdot v\cdot d + v\cdot i + l$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $Q$ represents the number of Doppler domain basis vectors, $v$ represents a transmission rank, $\pi(f) = \min\left(2\cdot n_{3,l}^{(f)}, 2\cdot\left(N_3 - n_{3,l}^{(f)}\right) - 1\right)$, $n_{3,l}^{(f)}$ represents an index mapped from the index $f$ of the frequency domain basis vector to $N_3$, and $N_3$ represents the number of candidate frequency domain basis vectors.

Mode 3: the priority of a coefficient of a layer is higher than the priority of a coefficient corresponding to a spatial domain basis vector, which is higher than the priority of a coefficient corresponding to a Doppler domain basis vector, which is higher than the priority of a coefficient corresponding to a frequency domain basis vector, where for coefficients at the same position in different layers, the smaller the number of layers, the greater the priority of the coefficient; the smaller an index of a spatial domain basis vector in the same layer, the greater the priority of the coefficient; the smaller a value of a second preset algorithm corresponding to an index of a Doppler domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi(f) = \min\left(2\cdot n_{3,l}^{(f)}, 2\cdot\left(N_3 - n_{3,l}^{(f)}\right) - 1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In one implementation, the second preset algorithm is: $\pi(d) = \min\left(2\cdot n_{4,l}^{(d)}, 2\cdot\left(N_4 - n_{4,l}^{(d)}\right) - 1\right)$, where $n_{4,l}^{(d)}$ represents an index mapped from the index $d$ of the Doppler domain basis vector to $N_4$, and $N_4$ represents the number of candidate Doppler domain basis vectors.

In mode 3, the coefficients with the smallest spatial domain basis vector index in the first layer are first sorted, and then the coefficients with the smallest spatial domain basis vector index in the second layer are sorted, and so on. After the coefficients with the smallest spatial domain basis vector index in all layers are sorted, the coefficients with the subminimum spatial domain basis vector index in the first layer are sorted, and then the coefficients with the subminimum spatial domain basis vector index in the second layer are sorted, and so on. After all coefficients of all spatial domain basis vectors in all layers are sorted, the coefficients of Doppler domain basis vectors are sorted. The coefficients of Doppler domain basis vectors are sorted in an interleaved way according to a value of a second preset algorithm. The smaller the value of the second preset algorithm, the greater the priority of the coefficient of the Doppler domain basis vector. After the coefficients of all Doppler domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l,i,f,d\right)=2\cdot L\cdot v\cdot Q\cdot \pi\left(f\right)+2\cdot L\cdot v\cdot \pi\left(d\right)+v\cdot i+l$$

where *l* represents the number of layers, *i* represents the index of the spatial domain basis vector, *f* represents the index of the frequency domain basis vector, *d* represents the index of the Doppler domain basis vector, *L* represents the number of spatial domain basis vectors in a polarization direction, *Q* represents the number of Doppler domain basis vectors, *v*

$$\pi\left(f\right)=\min\left(2\cdot n_{3,l}^{(f)},2\cdot \left(N_3-n_{3,l}^{(f)}\right)-1\right)$$

represents a transmission rank, $\quad$ , $\quad$ $n_{3,l}^{(f)}$ $\quad$ represents an index mapped from the index *f* of the frequency domain basis vector to $N_3$, $N_3$ represents the number of candidate frequency domain basis

$$\pi\left(d\right)=\min\left(2\cdot n_{4,l}^{(d)},2\cdot \left(N_4-n_{4,l}^{(d)}\right)-1\right)$$

vectors, $\quad$ , $\quad$ $n_{4,l}^{(d)}$ $\quad$ represents an index mapped from the index *d* of the Doppler domain basis vector to $N_4$, and $N_4$ represents the number of candidate Doppler domain basis vectors.

Mode 4: the priority of a coefficient of a layer is higher than the priority of a coefficient corresponding to a Doppler domain basis vector, which is higher than the priority of a coefficient corresponding to a spatial domain basis vector, which is higher than the priority of a coefficient corresponding to a frequency domain basis vector, where for coefficients at the same position in different layers, the smaller the number of layers, the greater the priority of the coefficient; the smaller an index of a Doppler domain basis vector in the same layer, the greater the priority of the coefficient; the smaller an index of a spatial domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\quad$ $$\pi\left(f\right)=\min\left(2\cdot n_{3,l}^{(f)},2\cdot \left(N_3-n_{3,l}^{(f)}\right)-1\right)$$ , where

$n_{3,l}^{(f)}$ represents an index mapped from the index *f* of the frequency domain basis vector to $N_3$, $N_3$ represents the number of candidate frequency domain basis vectors, and *l* represents the number of layers.

In mode 4, the coefficients with the smallest Doppler domain basis vector index in the first layer are first sorted, and then the coefficients with the smallest Doppler domain basis vector index in the second layer are sorted, and so on. After the coefficients with the smallest Doppler domain basis vector index in all layers are sorted, the coefficients with the subminimum Doppler domain basis vector index in the first layer are sorted, and then the coefficients with the subminimum Doppler domain basis vector index in the second layer are sorted, and so on. After all coefficients of all Doppler domain basis vectors in all layers are sorted, the coefficients of spatial domain basis vectors are sorted. The coefficients with the smallest spatial domain basis vector index are first sorted, and then the coefficients with the subminimum spatial domain basis vector index are sorted. After the coefficients of all spatial domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l,i,f,d\right)=2\cdot L\cdot v\cdot Q\cdot \pi\left(f\right)+v\cdot Q\cdot i+v\cdot d+l$$

where *l* represents the number of layers, *i* represents the index of the spatial domain basis vector, *f* represents the index of the frequency domain basis vector, *d* represents the index of the Doppler domain basis vector, *L* represents the number of spatial domain basis vectors in a polarization direction, *Q* represents the number of Doppler domain basis vectors, *v* represents a transmission rank, $$\pi\left(f\right)=\min\left(2\cdot n_{3,l}^{(f)},2\cdot \left(N_3-n_{3,l}^{(f)}\right)-1\right)$$ , $n_{3,l}^{(f)}$ represents an index mapped from the index *f* of the frequency domain basis vector to $N_3$, and $N_3$ represents the number of candidate frequency domain basis vectors.

Mode 5: the priority of a coefficient of a layer is higher than the priority of a coefficient corresponding to a Doppler domain basis vector, which is higher than the priority of a coefficient corresponding to a spatial domain basis vector, which is higher than the priority of a coefficient corresponding to a frequency domain basis vector, where for coefficients at the same position in different layers, the smaller the number of layers, the greater the priority of the coefficient; the smaller a value of a second preset algorithm corresponding to an index of a Doppler domain basis vector in the same layer, the greater the priority of the coefficient; the smaller an index of a spatial domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi\left(f\right)=\min\left(2\cdot n_{3,l}^{(f)},2\cdot\left(N_3-n_{3,l}^{(f)}\right)-1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In one implementation, the second preset algorithm is: $\pi\left(d\right)=\min\left(2\cdot n_{4,l}^{(d)},2\cdot\left(N_4-n_{4,l}^{(d)}\right)-1\right)$, where $n_{4,l}^{(d)}$ represents an index mapped from the index $d$ of the Doppler domain basis vector to $N_4$, and $N_4$ represents the number of candidate Doppler domain basis vectors.

In mode 5, the coefficients of Doppler domain basis vectors in different layers are sorted in an interleaved way. The smaller a value of a second preset algorithm, the greater the priority of a coefficient of a Doppler domain basis vector. After the coefficients of all Doppler domain basis vectors in all layers are sorted, the coefficients of spatial domain basis vectors are sorted. The coefficients with the smallest spatial domain basis vector index are first sorted, and then the coefficients with the subminimum spatial domain basis vector index are sorted. After the coefficients of all spatial domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l,i,f,d\right)=2\cdot L\cdot v\cdot Q\cdot\pi\left(f\right)+v\cdot Q\cdot i+v\cdot\pi\left(d\right)+l$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $Q$ represents the number of Doppler domain basis vectors, $v$ represents a transmission rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents the number of candidate frequency domain basis vectors, $\pi\left(d\right)=\min\left(2\cdot n_{4,l}^{(d)},2\cdot\left(N_4-n_{4,l}^{(d)}\right)-1\right)$, $n_{4,l}^{(d)}$ represents an index mapped from the index $d$ of the Doppler domain basis vector to $N_4$, and $N_4$ represents the number of candidate Doppler domain basis vectors.

Mode 6: the priority of a coefficient corresponding to a Doppler domain basis vector is higher than the priority of a coefficient of a layer, which is higher than the priority of a coefficient corresponding to a spatial domain basis vector, which is higher than the priority of a coefficient corresponding to a frequency domain basis vector, where the smaller an index of a Doppler domain basis vector in the same layer, the greater the priority of the coefficient; for coefficients at the same position in different layers, the smaller the number of layers, the greater the priority of the coefficient; the smaller an index of a spatial domain basis vector in the same layer, the greater the priority of the coefficient; and the smaller a value of a first preset algorithm corresponding to an index of a frequency domain basis vector in the same layer, the greater the priority of the coefficient.

In one implementation, the first preset algorithm is: $\pi\left(f\right)=\min\left(2\cdot n_{3,l}^{(f)},2\cdot\left(N_3-n_{3,l}^{(f)}\right)-1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 6, the coefficients with the smallest Doppler domain basis vector index in the first layer are first sorted, and then the coefficients with the subminimum Doppler domain basis vector index in the first layer are sorted, and so on. After the coefficients of all Doppler domain basis vectors in the first layer are sorted, the coefficients with the smallest Doppler domain basis vector index in the second layer are sorted, and then the coefficients with the subminimum Doppler domain basis vector index in the second layer are sorted, and so on. After all coefficients of all Doppler domain basis vectors in all layers are sorted, the coefficients of spatial domain basis vectors are sorted. The coefficients with the smallest spatial domain basis vector index are first sorted, and then the coefficients with the subminimum spatial domain basis vector index are sorted. After the coefficients of all spatial domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l,i,f,d\right) = 2 \cdot L \cdot v \cdot Q \cdot \pi\left(f\right) + v \cdot Q \cdot i + Q \cdot l + d$$

where $l$ represents the number of layers, $i$ represents the index of the spatial domain basis vector, $f$ represents the index of the frequency domain basis vector, $d$ represents the index of the Doppler domain basis vector, $L$ represents the number of spatial domain basis vectors in a polarization direction, $Q$ represents the number of Doppler domain basis vectors, $v$

represents a transmission rank, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, and $N_3$ represents the number of candidate frequency domain basis vectors.

In the embodiments of the present disclosure, by sorting the priorities of the non-zero coefficients, when the uplink resources allocated by the network device cannot transmit all contents of the CSI, some of the contents of the CSI are discarded while ensuring a certain system performance.

In the method for reporting CSI provided in an embodiment of the present disclosure, when the CSI is reported based on the enhanced Rel-17 type IIport selection codebook, the priority of the non-zero coefficient is determined based on one of the following modes.

Mode 1: the priority of a coefficient of a layer is higher than the priority of a coefficient corresponding to a CSI-RS port, which is higher than the priority of a coefficient corresponding to a frequency domain basis vector, which is higher than the priority of a coefficient corresponding to a Doppler domain basis vector, where for coefficients at the same position in different layers, the smaller the number of layers, the greater the priority of the coefficient; the smaller an index of a CSI-RS port in the same layer, the greater the priority of the coefficient; the smaller an index of a frequency domain basis vector in the same layer, the greater the priority of the coefficient; and the smaller an index of a Doppler domain basis vector in the same layer, the greater the priority of the coefficient.

In one implementation, the first preset algorithm is: $\pi\left(f\right) = \min\left(2 \cdot n_{3,l}^{(f)}, 2 \cdot \left(N_3 - n_{3,l}^{(f)}\right) - 1\right)$, where

$n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 1, the coefficients with the smallest CSI-RS port index in the first layer are first sorted, and then the coefficients with the smallest CSI-RS port index in the second layer are sorted, and so on. After the coefficients with the smallest CSI-RS port index in all layers are sorted, the coefficients with the subminimum CSI-RS port index in the first layer are sorted, and then the coefficients with the subminimum CSI-RS port index in the second layer are sorted, and so on. After all coefficients of all CSI-RS ports in all layers are sorted, the coefficients of frequency domain basis vectors in all layers are sorted. The smaller an index of a frequency domain basis vector, the greater the priority of the corresponding coefficient. After all coefficients of all frequency domain basis vectors in all layers are sorted, coefficients of Doppler domain basis vectors are sorted. The coefficients with the smallest Doppler domain basis vector index are first sorted, and then the coefficients with the subminimum Doppler domain basis vector index are sorted, until the coefficients of all Doppler domain basis vectors are sorted.

In some embodiments, the priority of the non-zero coefficient is determined based on a following formula:

$$\mathrm{Pri}\left(l,i,f,d\right) = K_1 \cdot v \cdot M \cdot d + K_1 \cdot v \cdot f + v \cdot i + l$$

where $l$ represents the number of layers, $i$ represents the index of the CSI-RS port, $f$ represents the index of the frequency domain basis vector, $d$ represents the index of the Doppler domain basis vector, $K_1$ represents the number of CSI-RS ports selected by the terminal, $v$ represents a transmission rank, and $M$ represents the number of frequency domain basis vectors.

Mode 2: the priority of a coefficient of a layer is higher than the priority of a coefficient corresponding to a CSI-RS port, which is higher than the priority of a coefficient corresponding to a Doppler domain basis vector, which is higher than the priority of a coefficient corresponding to a frequency domain basis vector, where for coefficients at the same position in different layers, the smaller the number of layers, the greater the priority of the coefficient; the smaller an index of a CSI-RS port in the same layer, the greater the priority of the coefficient; the smaller an index of a Doppler domain basis vector in the same layer, the greater the priority of the coefficient; and the smaller an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where

$n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 2, the coefficients with the smallest CSI-RS port index in the first layer are first sorted, and then the coefficients with the smallest CSI-RS port index in the second layer are sorted, and so on. After the coefficients with the smallest CSI-RS port index in all layers are sorted, the coefficients with the subminimum CSI-RS port index in the first layer are sorted, and then the coefficients with the subminimum CSI-RS port index in the second layer are sorted, and so on. After all coefficients of all CSI-RS ports in all layers are sorted, the coefficients of Doppler domain basis vectors are sorted. The coefficients with the smallest Doppler domain basis vector index are first sorted, and then the coefficients with the subminimum Doppler domain basis vector index are sorted. After the coefficients of all Doppler domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l,i,f,d) = K_1 \cdot v \cdot Q \cdot f + K_1 \cdot v \cdot d + v \cdot i + l$$

where $l$ represents the number of layers, $i$ represents the index of the CSI-RS port, $f$ represents the index of the frequency domain basis vector, $d$ represents the index of the Doppler domain basis vector, $Q$ represents the number of Doppler domain basis vectors, $v$ represents a transmission rank, and $K_1$ represents the number of CSI-RS ports selected by the terminal.

Mode 3: the priority of a coefficient of a layer is higher than the priority of a coefficient corresponding to a CSI-RS port, which is higher than the priority of a coefficient corresponding to a Doppler domain basis vector, which is higher than the priority of a coefficient corresponding to a frequency domain basis vector, where for coefficients at the same position in different layers, the smaller the number of layers, the greater the priority of the coefficient; the smaller an index of a CSI-RS port in the same layer, the greater the priority of the coefficient; the smaller a value of a second preset algorithm corresponding to an index of a Doppler domain basis vector in the same layer, the greater the priority of the coefficient; and the smaller an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where

$n_{3,l}^{(f)}$ represents an index mapped from the index $f$ of the frequency domain basis vector to $N_3$, $N_3$ represents the number of candidate frequency domain basis vectors, and $l$ represents the number of layers.

In one implementation, the second preset algorithm is: $\pi(d) = \min\left(2 \cdot n_{4,l}^{(d)}, 2 \cdot \left(N_4 - n_{4,l}^{(d)}\right) - 1\right)$, where

$n_{4,l}^{(d)}$ represents an index mapped from the index $d$ of the Doppler domain basis vector to $N_4$, and $N_4$ represents the number of candidate Doppler domain basis vectors.

In mode 3, the coefficients with the smallest CSI-RS port index in the first layer are first sorted, and then the coefficients with the smallest CSI-RS port index in the second layer are sorted, and so on. After the coefficients with the smallest CSI-RS port index in all layers are sorted, the coefficients with the subminimum CSI-RS port index in the first layer are sorted, and then the coefficients with the subminimum CSI-RS port index in the second layer are sorted, and so on. After all coefficients of all CSI-RS ports in all layers are sorted, the coefficients of Doppler domain basis vectors are sorted. The coefficients of Doppler domain basis vectors are sorted in an interleaved way according to a value of a second preset algorithm. The smaller the value of the second preset algorithm, the greater the priority of the coefficient of the Doppler domain basis vector. After the coefficients of all Doppler domain basis vectors are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l,i,f,d\right)=K_1\cdot v\cdot Q\cdot f+K_1\cdot v\cdot \pi\left(d\right)+v\cdot i+l$$

where $l$ represents the number of layers, $i$ represents the index of the CSI-RS port, $f$ represents the index of the frequency domain basis vector, $d$ represents the index of the Doppler domain basis vector, $Q$ represents the number of Doppler domain basis vectors, $v$ represents a transmission rank, $K_1$ represents the number of CSI-RS ports selected by the terminal, $\pi\left(d\right)=\min\left(2\cdot n_{4,l}^{(d)},2\cdot\left(N_4-n_{4,l}^{(d)}\right)-1\right)$, $n_{4,l}^{(d)}$ represents an index mapped from the index $d$ of the Doppler domain basis vector to $N_4$, and $N_4$ represents the number of candidate Doppler domain basis vectors.

Mode 4: the priority of a coefficient of a layer is higher than the priority of a coefficient corresponding to a Doppler domain basis vector, which is higher than the priority of a coefficient corresponding to a CSI-RS port, which is higher than the priority of a coefficient corresponding to a frequency domain basis vector, where for coefficients at the same position in different layers, the smaller the number of layers, the greater the priority of the coefficient; the smaller an index of a Doppler domain basis vector in the same layer, the greater the priority of the coefficient; the smaller an index of a CSI-RS port in the same layer, the greater the priority of the coefficient; and the smaller an index of a frequency domain basis vector in the same layer, the greater the priority of the coefficient.

In one implementation, the first preset algorithm is: $\pi\left(f\right)=\min\left(2\cdot n_{3,l}^{(f)},2\cdot\left(N_3-n_{3,l}^{(f)}\right)-1\right)$, where $n_{3,l}^{(f)}$ represents an index mapped from the index $f$ of the frequency domain basis vector to $N_3$, $N_3$ represents the number of candidate frequency domain basis vectors, and $l$ represents the number of layers.

In mode 4, the coefficients with the smallest Doppler domain basis vector index in the first layer are first sorted, and then the coefficients with the smallest Doppler domain basis vector index in the second layer are sorted, and so on. After the coefficients with the smallest Doppler domain basis vector index in all layers are sorted, the coefficients with the subminimum Doppler domain basis vector index in the first layer are sorted, and then the coefficients with the subminimum Doppler domain basis vector index in the second layer are sorted, and so on. After all coefficients of all Doppler domain basis vectors in all layers are sorted, the coefficients of CSI-RS ports are sorted. The coefficients with the smallest CSI-RS port index are first sorted, and then the coefficients with the subminimum CSI-RS port index are sorted. After the coefficients of all CSI-RS ports are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}\left(l,i,f,d\right)=K_1\cdot v\cdot Q\cdot f+v\cdot Q\cdot i+v\cdot d+l$$

where $l$ represents the number of layers, $i$ represents the index of the CSI-RS port, $f$ represents the index of the frequency domain basis vector, $d$ represents the index of the Doppler domain basis vector, $Q$ represents the number of Doppler domain basis vectors, $v$ represents a transmission rank, and $K_1$ represents the number of CSI-RS ports selected by the terminal.

Mode 5: the priority of a coefficient of a layer is higher than the priority of a coefficient corresponding to a Doppler domain basis vector, which is higher than the priority of a coefficient corresponding to a CSI-RS port, which is higher than the priority of a coefficient corresponding to a frequency domain basis vector, where for coefficients at the same position in different layers, the smaller the number of layers, the greater the priority of the coefficient; the smaller a value of a second preset algorithm corresponding to an index of a Doppler domain basis vector in the same layer, the greater the priority of the coefficient; the smaller an index of a CSI-RS port in the same layer, the greater the priority of the coefficient; and the smaller an index of a frequency domain basis vector in the same layer, the greater the priority of the coefficient.

In one implementation, the first preset algorithm is: $\pi\left(f\right)=\min\left(2\cdot n_{3,l}^{(f)},2\cdot\left(N_3-n_{3,l}^{(f)}\right)-1\right)$, where $n_{3,l}^{(f)}$ represents an index mapped from the index $f$ of the frequency domain basis vector to $N_3$, $N_3$ represents the number

of candidate frequency domain basis vectors, and *l* represents the number of layers.

In one implementation, the second preset algorithm is: $\pi(d) = \min\left(2 \cdot n_{4,l}^{(d)}, 2 \cdot \left(N_4 - n_{4,l}^{(d)}\right) - 1\right)$, where $n_{4,l}^{(d)}$ represents an index mapped from the index *d* of the Doppler domain basis vector to $N_4$, and $N_4$ represents the number of candidate Doppler domain basis vectors.

In mode 5, the coefficients of Doppler domain basis vectors in different layers are sorted in an interleaved way. The smaller a value of a second preset algorithm, the greater the priority of a coefficient of a Doppler domain basis vector. After the coefficients of all Doppler domain basis vectors in all layers are sorted, the coefficients of CSI-RS ports are sorted. The coefficients with the smallest CSI-RS port index are first sorted, and then the coefficients with the subminimum CSI-RS port index are sorted. After the coefficients of all CSI-RS ports are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l, i, f, d) = K_1 \cdot v \cdot Q \cdot f + v \cdot Q \cdot i + v \cdot \pi(d) + l$$

where *l* represents the number of layers, *i* represents the index of the CSI-RS port, *f* represents the index of the frequency domain basis vector, *d* represents the index of the Doppler domain basis vector, *Q* represents the number of Doppler domain basis vectors, *v* represents a transmission rank, $K_1$ represents the number of CSI-RS ports selected by the terminal, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index *d* of the Doppler domain basis vector to $N_4$, and $N_4$ represents the number of candidate Doppler domain basis vectors.

Mode 6: the priority of a coefficient corresponding to a Doppler domain basis vector is higher than the priority of a coefficient of a layer, which is higher than the priority of a coefficient corresponding to a CSI-RS port, which is higher than the priority of a coefficient corresponding to a frequency domain basis vector, where the smaller an index of a Doppler domain basis vector in the same layer, the greater the priority of the coefficient; for coefficients at the same position in different layers, the smaller the number of layers, the greater the priority of the coefficient; the smaller an index of a CSI-RS port in the same layer, the greater the priority of the coefficient; and the smaller an index of a frequency domain basis vector in the same layer, the greater the priority of the coefficient.

In one implementation, the first preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index *f* of the frequency domain basis vector to $N_3$, $N_3$ represents the number of candidate frequency domain basis vectors, and *l* represents the number of layers.

In mode 6, the coefficients with the smallest Doppler domain basis vector index in the first layer are first sorted, and then the coefficients with the subminimum Doppler domain basis vector index in the first layer are sorted, and so on. After the coefficients of all Doppler domain basis vectors in the first layer are sorted, the coefficients with the smallest Doppler domain basis vector index in the second layer are sorted, and then the coefficients with the subminimum Doppler domain basis vector index in the second layer are sorted, and so on. After all coefficients of all Doppler domain basis vectors in all layers are sorted, the coefficients of CSI-RS ports are sorted. The coefficients with the smallest CSI-RS port index are first sorted, and then the coefficients with the subminimum CSI-RS port index are sorted. After the coefficients of all CSI-RS ports are sorted, the coefficients of frequency domain basis vectors in all layers are sorted in an interleaved way. The smaller a value of a first preset algorithm corresponding to an index of a frequency domain basis vector, the greater the priority of the corresponding coefficient.

In some embodiments, the priority of the non-zero coefficient is determined based on a following formula:

$$\mathrm{Pri}(l, i, f, d) = K_1 \cdot v \cdot Q \cdot f + v \cdot Q \cdot i + Q \cdot l + d$$

where *l* represents the number of layers, *i* represents the index of the CSI-RS port, *f* represents the index of the frequency domain basis vector, *d* represents the index of the Doppler domain basis vector, *Q* represents the number of Doppler domain basis vectors, *v* represents a transmission rank, and $K_1$ represents the number of CSI-RS ports selected by the terminal.

In the embodiments of the present disclosure, by sorting the priorities of the non-zero coefficients, when the uplink resources allocated by the network device cannot transmit all contents of the CSI, some of the contents of the CSI are discarded while ensuring a certain system performance.

It should be noted that those skilled in the art will appreciate that the various implementations/examples in above embodiments of the present disclosure may be used in conjunction with the foregoing embodiments or may be used independently. The principles of the various implementations/examples are similar, whether used alone or in conjunction with the foregoing embodiments. In an implementation of the present disclosure, some embodiments are described as embodiments that are used together. Certainly, it will be understood by those skilled in the art that such illustrations are not intended to limit the embodiments of the present disclosure.

Based on the same concept, embodiments of the present disclosure also provide an apparatus for reporting channel status information (CSI).

It may be understood that the apparatus for reporting channel status information (CSI) provided in the embodiments of the present disclosure includes corresponding hardware structures and/or software modules for performing various functions in order to implement the above-mentioned functions. Embodiments of the present disclosure may be implemented in a form of hardware or a combination of hardware and computer software in combination with units and algorithm steps of each example disclosed in the embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present disclosure.

FIG. 6 is a block diagram illustrating an apparatus for reporting CSI according to an illustrative embodiment. Referring to FIG. 6, the apparatus includes a sending module 101.

The sending module 101 is configured to send CSI to a network device based on a codebook parameter in response to the terminal being configured with the codebook parameter, in which the codebook parameter includes one or more Doppler domain basis vectors and/or a length of a Doppler domain basis vector.

In an implementation, the CSI includes first information, and the first information includes at least one of: rank indication information, channel quality indication information, or number indication information of non-zero coefficients of all layers.

In an implementation, the CSI includes second information, the second information includes multiple information groups, and different information groups in the multiple information groups correspond to different priorities; and one or more information groups with lower priorities in the second information are discarded in response to uplink resources allocated by the network device being unable to transmit all information included in the CSI.

In an implementation, the second information includes a first information group, and the first information group includes at least one of: indication information of a Doppler domain basis vector, spatial domain basis vector indication information or CSI-RS port selection indication information in each polarization direction, indication information of a strongest coefficient at each layer, or indication information of a frequency domain basis vector.

In an implementation, the second information further includes a second information group, and the second information group includes at least one of: indication information of a Doppler domain basis vector; indication information of a frequency domain basis vector; position indication information of $vB - \left\lfloor \dfrac{K^{NZ}}{2} \right\rfloor$ bits of high-priority non-zero coefficients; amplitude and phase quantization information corresponding to $\max\left(0, \left\lceil \dfrac{K^{NZ}}{2} \right\rceil - \upsilon\right)$ high-priority non-zero coefficients; or coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors, where $v$ represents a transmission rank, $B$ represents an indication size of non-zero coefficients at each layer, $K^{NZ}$ represents a number of non-zero coefficients corresponding to all layers, and $Q$ represents a number of Doppler domain basis vectors.

In an implementation, the second information further includes a third information group, and the third information group includes at least one of: indication information of a Doppler domain basis vector; position indication information of $\left\lfloor \dfrac{K^{NZ}}{2} \right\rfloor$ bits of low-priority non-zero coefficients; amplitude and phase quantization information corresponding to

$$\min\left(K^{NZ} - v, \left\lceil \frac{K^{NZ}}{2} \right\rceil\right)$$ low-priority non-zero coefficients; coefficients and coefficient indication information for *v* transmission layers corresponding to Doppler domain basis vectors except the first Doppler domain basis vector; or a combination coefficient and coefficient indication information for *v* transmission layers corresponding to $Q - \left\lceil \frac{Q}{2} \right\rceil$ or

$Q - \left\lceil \frac{Q}{2} \right\rceil$ Doppler domain basis vectors, where $K^{NZ}$ represents the number of non-zero coefficients corresponding to all layers, and *Q* represents the number of Doppler domain basis vectors.

In an implementation, a sorting of priorities of coefficients in the CSI includes: a priority of a coefficient of a layer being higher than a priority of a coefficient corresponding to a spatial domain basis vector/CSI-RS port, which is higher than a priority of a coefficient corresponding to a frequency domain basis vector, which is higher than a priority of a coefficient corresponding to a Doppler domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a frequency domain basis vector/a value of a first preset algorithm corresponding to the index of the frequency domain basis vector in the same layer, the greater the priority of the coefficient; and the smaller an index of a Doppler domain basis vector in the same layer, the greater the priority of the coefficient; or a priority of a coefficient of a layer being higher than a priority of a coefficient corresponding to a spatial domain basis vector/CSI-RS port, which is higher than a priority of a coefficient corresponding to a Doppler domain basis vector, which is higher than a priority of a coefficient corresponding to a frequency domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a Doppler domain basis vector/a value of a second preset algorithm corresponding to the index of the Doppler domain basis vector in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient of a layer being higher than a priority of a coefficient corresponding to a Doppler domain basis vector, which is higher than a priority of a coefficient corresponding to a spatial domain basis vector/CSI-RS port, which is higher than a priority of a coefficient corresponding to a frequency domain basis vector, in which for coefficients at the same position in different layers, the smaller a number of layers, the greater the priority of the coefficient; the smaller an index of a Doppler domain basis vector/a value of a second preset algorithm corresponding to the index of the Doppler domain basis vector in the same layer, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient corresponding to a Doppler domain basis vector being higher than a priority of a coefficient of a layer, which is higher than a priority of a coefficient corresponding to a spatial domain basis vector/CSI-RS port, which is higher than a priority of a coefficient corresponding to a frequency domain basis vector, in which the smaller an index of a Doppler domain basis vector in the same layer, the greater the priority of the coefficient; for coefficients at the same position in different layers, the smaller a number of layers, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient.

In an implementation, in response to the priority of the coefficient of the layer being higher than the priority of the coefficient corresponding to the spatial domain basis vector/CSI-RS port, which is higher than the priority of the coefficient corresponding to the frequency domain basis vector, which is higher than the priority of the coefficient corresponding to the Doppler domain basis vector, the priority of the coefficient is determined based on following formulas:

$$\mathrm{Pri}(l,i,f,d) = 2 \cdot L \cdot v \cdot M_v \cdot d + 2 \cdot L \cdot v \cdot \pi(f) + v \cdot i + l \ ;$$

or

$$\mathrm{Pri}\big(l,i,f,d\big) = K_1 \cdot v \cdot M \cdot d + K_1 \cdot v \cdot f + v \cdot i + l \ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $v$ represents a transmission rank, $M_v$ represents a number of frequency domain basis vectors, $\pi\big(f\big) = \min\Big(2 \cdot n_{3,l}^{(f)}, 2 \cdot \big(N_3 - n_{3,l}^{(f)}\big) - 1\Big)$, $n_{3,l}^{(f)}$ represents an index mapped from the index $f$ of the frequency domain basis vector to $N_3$, $N_3$ represents a number of candidate frequency domain basis vectors, $K_1$ represents a number of CSI-RS ports selected by the terminal, and $M$ represents a number of frequency domain basis vectors.

In an implementation, in response to the priority of the coefficient of the layer being higher than the priority of the coefficient corresponding to the spatial domain basis vector/CSI-RS port, which is higher than the priority of the coefficient corresponding to the Doppler domain basis vector, which is higher than the priority of the coefficient corresponding to the frequency domain basis vector, the priority of the coefficient is determined based on following formulas:

$$\mathrm{Pri}\big(l,i,f,d\big) = 2 \cdot L \cdot v \cdot Q \cdot \pi\big(f\big) + 2 \cdot L \cdot v \cdot d + v \cdot i + l \ ;$$

or

$$\mathrm{Pri}\big(l,i,f,d\big) = K_1 \cdot v \cdot Q \cdot f + K_1 \cdot v \cdot d + v \cdot i + l \ ;$$

or

$$\mathrm{Pri}\big(l,i,f,d\big) = 2 \cdot L \cdot v \cdot Q \cdot \pi\big(f\big) + 2 \cdot L \cdot v \cdot \pi\big(d\big) + v \cdot i + l \ ;$$

or

$$\mathrm{Pri}\big(l,i,f,d\big) = K_1 \cdot v \cdot Q \cdot f + K_1 \cdot v \cdot \pi\big(d\big) + v \cdot i + l \ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi\big(f\big) = \min\Big(2 \cdot n_{3,l}^{(f)}, 2 \cdot \big(N_3 - n_{3,l}^{(f)}\big) - 1\Big)$, $n_{3,l}^{(f)}$ represents an index mapped from the index $f$ of the frequency domain basis vector to $N_3$, $N_3$ represents a number of candidate frequency domain basis vectors, $\pi\big(d\big) = \min\Big(2 \cdot n_{4,l}^{(d)}, 2 \cdot \big(N_4 - n_{4,l}^{(d)}\big) - 1\Big)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient of the layer being higher than the priority of the coefficient corresponding to the Doppler domain basis vector, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot \pi\left(f\right)+v\cdot Q\cdot i+v\cdot d+l$$ ;

or

$$\mathrm{Pri}\left(l,i,f,d\right)=K_1\cdot v\cdot Q\cdot f+v\cdot Q\cdot i+v\cdot d+l$$ ;

or

$$\mathrm{Pri}\left(l,i,f,d\right)=2\cdot L\cdot v\cdot Q\cdot \pi\left(f\right)+v\cdot Q\cdot i+v\cdot \pi\left(d\right)+l$$ ;

or

$$\mathrm{Pri}\left(l,i,f,d\right)=K_1\cdot v\cdot Q\cdot f+v\cdot Q\cdot i+v\cdot \pi\left(d\right)+l$$ ,

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi\left(f\right)=\min\left(2\cdot n_{3,l}^{(f)},2\cdot\left(N_3-n_{3,l}^{(f)}\right)-1\right)$ , $n_{3,l}^{(f)}$ represents an index mapped from the index $f$ of the frequency domain basis vector to $N_3$, $N_3$ represents a number of candidate frequency domain basis vectors, $\pi\left(d\right)=\min\left(2\cdot n_{4,l}^{(d)},2\cdot\left(N_4-n_{4,l}^{(d)}\right)-1\right)$ , $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient corresponding to the Doppler domain basis vector being higher than the priority of the coefficient of the layer, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}\left(l,i,f,d\right)=2\cdot L\cdot v\cdot Q\cdot \pi\left(f\right)+v\cdot Q\cdot i+Q\cdot l+d$$ ;

or

$$\mathrm{Pri}\left(l,i,f,d\right)=K_1\cdot v\cdot Q\cdot f+v\cdot Q\cdot i+Q\cdot l+d$$ ,

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi\left(f\right)=\min\left(2\cdot n_{3,l}^{(f)},2\cdot\left(N_3-n_{3,l}^{(f)}\right)-1\right)$ , $n_{3,l}^{(f)}$ represents an index mapped from the index $f$ of the frequency domain basis vector to $N_3$, $N_3$ represents a number of candidate frequency domain basis vectors, and $K_1$ represents a number of CSI-RS ports selected by the terminal.

FIG. 7 is a block diagram illustrating an apparatus for reporting CSI according to an illustrative embodiment. Referring to FIG. 7, the apparatus includes a configuring module 201 and a receiving module 202.

The configuring module 201 is configured to configure a codebook parameter for a terminal, in which the codebook parameter includes one or more Doppler domain basis vectors and/or a length of a Doppler domain basis vector. The receiving module 202 is configured to receive CSI sent by the terminal, in which the codebook parameter includes the number of the one or more Doppler domain basis vectors.

In an implementation, the CSI includes first information, and the first information includes at least one of: rank indication information, channel quality indication information, or number indication information of non-zero coefficients of all layers.

In an implementation, the CSI includes second information, the second information includes multiple information groups, and different information groups in the multiple information groups correspond to different priorities; and one or more information groups with lower priorities in the second information are discarded in response to uplink resources allocated by the network device being unable to transmit all information included in the CSI.

In an implementation, the second information includes a first information group, and the first information group includes at least one of: indication information of a Doppler domain basis vector, spatial domain basis vector indication information or CSI-RS port selection indication information in each polarization direction, indication information of a strongest coefficient at each layer, or indication information of a frequency domain basis vector.

In an implementation, the second information further includes a second information group, and the second information group includes at least one of: indication information of a Doppler domain basis vector; indication information of a frequency domain basis vector; position indication information of $vB - \left\lfloor \dfrac{K^{NZ}}{2} \right\rfloor$ bits of high-priority non-zero coefficients; amplitude and phase quantization information corresponding to $\max\left(0, \left\lceil \dfrac{K^{NZ}}{2} \right\rceil - \upsilon \right)$ high-priority non-zero coefficients; or coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors, where $v$ represents a transmission rank, $B$ represents an indication size of non-zero coefficients at each layer, $K^{NZ}$ represents a number of non-zero coefficients corresponding to all layers, and $Q$ represents a number of Doppler domain basis vectors.

In an implementation, the second information further includes a third information group, and the third information group includes at least one of: indication information of a Doppler domain basis vector; position indication information of $\left\lfloor \dfrac{K^{NZ}}{2} \right\rfloor$ bits of low-priority non-zero coefficients; amplitude and phase quantization information corresponding to $\min\left( K^{NZ} - v, \left\lceil \dfrac{K^{NZ}}{2} \right\rceil \right)$ non-zero coefficients; coefficients and coefficient indication information for $v$ transmission layers corresponding to Doppler domain basis vectors except the first Doppler domain basis vector; or a combination coefficient and coefficient indication information for $v$ transmission layers corresponding to $Q - \left\lfloor \dfrac{Q}{2} \right\rfloor$ or $Q - \left\lceil \dfrac{Q}{2} \right\rceil$ Doppler domain basis vectors, where $K^{NZ}$ represents the number of non-zero coefficients corresponding to all layers, and $Q$ represents the number of Doppler domain basis vectors.

In an implementation, a sorting of priorities of coefficients in the CSI includes: a priority of a coefficient of a layer being higher than a priority of a coefficient corresponding to a spatial domain basis vector/CSI-RS port, which is higher than a priority of a coefficient corresponding to a frequency domain basis vector, which is higher than a priority of a coefficient corresponding to a Doppler domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a frequency domain basis vector/a value of a first preset algorithm corresponding to the index of the frequency domain basis vector in the same layer, the greater the priority of the coefficient; and the smaller an index of a Doppler domain basis vector in the same layer, the greater the priority of the coefficient; or a priority of a coefficient of a layer being higher than a priority of a coefficient corresponding to a spatial domain basis vector/CSI-RS port, which is higher than a priority of a coefficient corresponding to a Doppler domain basis vector, which is higher than a priority of a coefficient corresponding to a frequency domain basis vector, in which for coefficients at the same position in different layers, the smaller a number of layers, the greater the priority of the coefficient; the smaller an index of a spatial domain basis vector/CSI-RS port in the same layer, the greater the priority of the coefficient; the smaller an index of a Doppler domain basis vector/a value of a second preset algorithm corresponding to the index of the Doppler domain basis vector in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient of a layer being higher than a priority of a coefficient corresponding to a Doppler domain basis vector, which is higher than a priority of a coefficient corresponding to a spatial domain basis vector/CSI-RS port, which is higher than a priority of a coefficient corresponding to a frequency domain basis vector, in which for coefficients at the same position in different layers, the smaller a number of layers, the greater the priority of the coefficient; the smaller an index of a Doppler domain basis vector/a value of a second preset algorithm corresponding to the index of the Doppler domain basis vector in the same layer, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient; or a priority of a coefficient corresponding to a Doppler domain basis vector being higher than a priority of a coefficient of a layer, which is higher than a priority of a coefficient corresponding to a spatial domain basis vector/CSI-RS port, which is higher than a priority of a coefficient corresponding to a frequency domain basis vector, in which the smaller an index of a Doppler domain basis vector in the same layer, the greater the priority of the coefficient; for coefficients at the same position in different layers, the smaller a number of layers, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient.

In an implementation, in response to the priority of the coefficient of the layer being higher than the priority of the coefficient corresponding to the spatial domain basis vector/CSI-RS port, which is higher than the priority of the coefficient corresponding to the frequency domain basis vector, which is higher than the priority of the coefficient corresponding to the Doppler domain basis vector, the priority of the coefficient is determined based on following formulas:

$$\mathrm{Pri}\left(l,i,f,d\right)=2\cdot L\cdot v\cdot M_{v}\cdot d+2\cdot L\cdot v\cdot \pi\left(f\right)+v\cdot i+l\ ;$$

or

$$\mathrm{Pri}\left(l,i,f,d\right)=K_{1}\cdot v\cdot M\cdot d+K_{1}\cdot v\cdot f+v\cdot i+l\ ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $v$ represents a transmission rank, $M_v$ represents a number of frequency domain basis vectors, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the frequency domain basis vector to $N_3$, $N_3$ represents a number of candidate frequency domain basis vectors, $K_1$ represents a number of CSI-RS ports selected by the terminal, and $M$ represents a number of frequency domain basis vectors.

In an implementation, in response to the priority of the coefficient of the layer being higher than the priority of the coefficient corresponding to the spatial domain basis vector/CSI-RS port, which is higher than the priority of the coefficient corresponding to the Doppler domain basis vector, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + 2 \cdot L \cdot v \cdot d + v \cdot i + l$$ ;

or

$$\mathrm{Pri}(l,i,f,d) = K_1 \cdot v \cdot Q \cdot f + K_1 \cdot v \cdot d + v \cdot i + l$$ ;

or

$$\mathrm{Pri}(l,i,f,d) = 2 \cdot L \cdot v \cdot Q \cdot \pi(f) + 2 \cdot L \cdot v \cdot \pi(d) + v \cdot i + l$$ ;

or

$$\mathrm{Pri}(l,i,f,d) = K_1 \cdot v \cdot Q \cdot f + K_1 \cdot v \cdot \pi(d) + v \cdot i + l$$ ,

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient of the layer being higher than the priority of the coefficient corresponding to the Doppler domain basis vector, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + v \cdot Q \cdot i + v \cdot d + l$$ ;

or

$$\mathrm{Pri}(l,i,f,d) = K_1 \cdot v \cdot Q \cdot f + v \cdot Q \cdot i + v \cdot d + l$$ ;

or

$$\mathrm{Pri}(l,i,f,d) = 2 \cdot L \cdot v \cdot Q \cdot \pi(f) + v \cdot Q \cdot i + v \cdot \pi(d) + l$$ ; (

or

$$\mathrm{Pri}(l,i,f,d) = K_1 \cdot v \cdot Q \cdot f + v \cdot Q \cdot i + v \cdot \pi(d) + l,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors,

$v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis

vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

In an implementation, in response to the priority of the coefficient corresponding to the Doppler domain basis vector being higher than the priority of the coefficient of the layer, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + v \cdot Q \cdot i + Q \cdot l + d;$$

or

$$\mathrm{Pri}(l,i,f,d) = K_1 \cdot v \cdot Q \cdot f + v \cdot Q \cdot i + Q \cdot l + d,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors,

$v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, and $K_1$ represents a number of CSI-RS ports selected by the terminal.

With respect to the apparatus in the above embodiments, the specific manners for performing operations for individual modules therein have been described in detail in the embodiments regarding the method, which will not be elaborated herein.

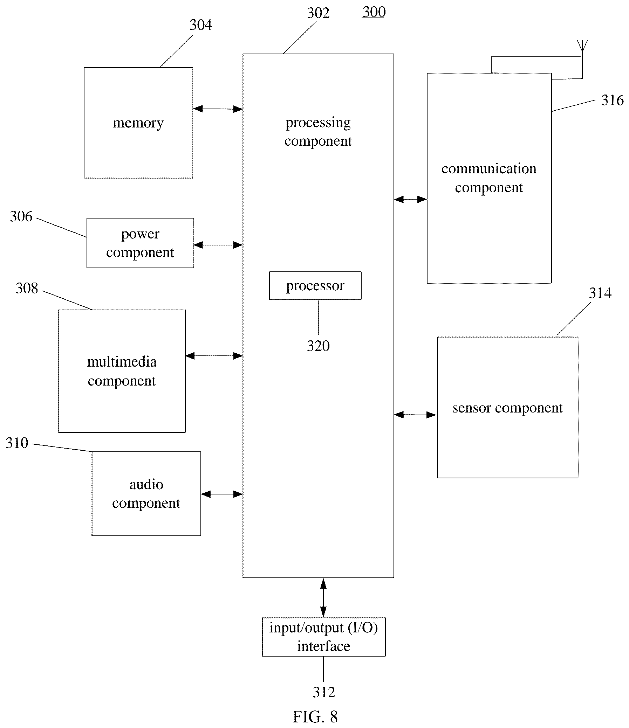

FIG. 8 is a block diagram illustrating a device for reporting channel status information (CSI) according to an illustrative embodiment. For example, the device 300 may be a mobile phone, a computer, a digital broadcast terminal, a messaging device, a game console, a tablet device, a medical device, a fitness device, a personal digital assistant, or the like.

Referring to FIG. 8, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 may include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 may access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 304, executable by the processor 320 in the device 300, for completing the above-mentioned methods. For example, the non-transitory computer-readable storage medium may be a ROM, a random access memory (RAM), a CD-ROM, a magnetic tape, a floppy disc, an optical data storage device, and the like.

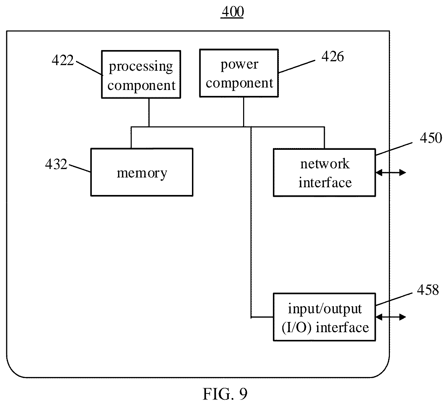

FIG. 9 is a block diagram illustrating a device for reporting channel status information (CSI) according to an illustrative embodiment. For example, the device 400 may be provided as a network device. Referring to FIG. 9, the device 400 includes a processing component 422 and a memory resource represented by a memory 432. The processing component 422 may further include one or more processors. The memory 432 is configured to store instructions executable by the processing component 422, such as an application program. The application program stored in the memory 432 may include one or more modules each corresponding to a set of instructions. In addition, the processing component 422 is configured to execute the instructions to perform the above-mentioned methods.

The device 400 further includes a power component 426 configured to perform a power management on the device 400, a wired or wireless network interface 450 configured to connect the device 400 to the network, and an input/output (I/O) interface 458. The device 400 may operate an operating system stored in the memory 432, such as Windows Server™, Mac OS X™, Unix™, Linux™, Free BSD™, or the like.

In an illustrative embodiment, there is also provided a non-transitory computer readable storage medium including instructions, such as included in the memory 432, executable by the processing component 422 in the device 400, for completing the above-mentioned methods. For example, the non-transitory computer-readable storage medium may be a ROM, a random access memory (RAM), a CD-ROM, a magnetic tape, a floppy disc, an optical data storage device, and the like.

It is further understood that "a plurality" in this disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that the meaning of terms such as "in response to", "if", and the like involved in the present disclosure will depend on the context and the actual use scenario. As used herein, the term "in response to" may be construed to mean "when" or "upon" or "if" or "in a case where" depending on the context.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

**Claims**

1. A method for reporting channel status information (CSI), performed by a terminal and comprising:

   sending CSI to a network device based on a codebook parameter in response to the terminal being configured with the codebook parameter,
   wherein the codebook parameter comprises one or more Doppler domain basis vectors and/or a length of a Doppler domain basis vector.

2. The method according to claim 1, wherein the CSI comprises first information, and the first information comprises at least one of:

   rank indication information;
   channel quality indication information; or
   number indication information of non-zero coefficients of all layers.

3. The method according to claim 1 or 2, wherein the CSI comprises second information, the second information comprises multiple information groups, and different information groups in the multiple information groups correspond to different priorities;
   one or more information groups with lower priorities in the second information are discarded in response to uplink resources allocated by the network device being unable to transmit all information comprised in the CSI.

4. The method according to claim 3, wherein the second information comprises a first information group, and the first information group comprises at least one of:

indication information of a Doppler domain basis vector;
spatial domain basis vector indication information or channel status information-reference signal (CSI-RS) port selection indication information in each polarization direction;
indication information of a strongest coefficient at each layer; or
indication information of a frequency domain basis vector.

5. The method according to claim 4, wherein the second information further comprises a second information group, and the second information group comprises at least one of:

indication information of a Doppler domain basis vector;
indication information of a frequency domain basis vector;

position indication information of $vB - \left\lfloor \dfrac{K^{NZ}}{2} \right\rfloor$ bits of high-priority non-zero coefficients;

amplitude and phase quantization information corresponding to $\max\left(0, \left\lceil \dfrac{K^{NZ}}{2} \right\rceil - v\right)$ high-priority non-zero coefficients; or

coefficients and coefficient indication information for $v$ transmission layers corresponding to a first Doppler domain basis vector or $\left\lfloor \dfrac{Q}{2} \right\rfloor$ $\left\lceil \dfrac{Q}{2} \right\rceil$ Doppler domain basis vectors,

where $v$ represents a transmission rank, $B$ represents an indication size of non-zero coefficients at each layer, $K^{NZ}$ represents a number of non-zero coefficients corresponding to all layers, and $Q$ represents a number of Doppler domain basis vectors.

6. The method according to claim 5, wherein the second information further comprises a third information group, and the third information group comprises at least one of:

indication information of a Doppler domain basis vector;

position indication information of $\left\lfloor \dfrac{K^{NZ}}{2} \right\rfloor$ bits of low-priority non-zero coefficients;

amplitude and phase quantization information corresponding to $\min\left(K^{NZ} - v, \left\lceil \dfrac{K^{NZ}}{2} \right\rceil\right)$ low-priority non-zero coefficients;

coefficients and coefficient indication information for $v$ transmission layers corresponding to Doppler domain basis vectors except the first Doppler domain basis vector; or
a combination coefficient and coefficient indication information for $v$ transmission layers corresponding to

$Q - \left\lfloor \dfrac{Q}{2} \right\rfloor$ or $Q - \left\lceil \dfrac{Q}{2} \right\rceil$ Doppler domain basis vectors,

where $K^{NZ}$ represents the number of non-zero coefficients corresponding to all layers, and $Q$ represents the number of Doppler domain basis vectors.

7. The method according to claim 1, wherein a sorting of priorities of coefficients in the CSI comprises:

a priority of a coefficient of a layer being higher than a priority of a coefficient corresponding to a spatial domain basis vector/CSI-RS port, which is higher than a priority of a coefficient corresponding to a frequency domain basis vector, which is higher than a priority of a coefficient corresponding to a Doppler domain basis vector, wherein for coefficients at the same position in different layers, the smaller a number of layers, the greater the priority of the coefficient; the smaller an index of a spatial domain basis vector/CSI-RS port in the same layer, the greater the priority of the coefficient; the smaller an index of a frequency domain basis vector/a value of a first preset algorithm corresponding to the index of the frequency domain basis vector in the same layer, the greater the priority of the coefficient; and the smaller an index of a Doppler domain basis vector in the same layer, the greater the priority of the coefficient; or

a priority of a coefficient of a layer being higher than a priority of a coefficient corresponding to a spatial domain basis vector/CSI-RS port, which is higher than a priority of a coefficient corresponding to a Doppler domain basis vector, which is higher than a priority of a coefficient corresponding to a frequency domain basis vector, wherein for coefficients at the same position in different layers, the smaller a number of layers, the greater the priority of the coefficient; the smaller an index of a spatial domain basis vector/CSI-RS port in the same layer, the greater the priority of the coefficient; the smaller an index of a Doppler domain basis vector/a value of a second preset algorithm corresponding to the index of the Doppler domain basis vector in the same layer, the greater the priority of the coefficient; and the smaller an index of a frequency domain basis vector/a value of a first preset algorithm corresponding to the index of the frequency domain basis vector in the same layer, the greater the priority of the coefficient; or

a priority of a coefficient of a layer being higher than a priority of a coefficient corresponding to a Doppler domain basis vector, which is higher than a priority of a coefficient corresponding to a spatial domain basis vector/CSI-RS port, which is higher than a priority of a coefficient corresponding to a frequency domain basis vector, wherein for coefficients at the same position in different layers, the smaller a number of layers, the greater the priority of the coefficient; the smaller an index of a Doppler domain basis vector/a value of a second preset algorithm corresponding to the index of the Doppler domain basis vector in the same layer, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient; or

a priority of a coefficient corresponding to a Doppler domain basis vector being higher than a priority of a coefficient of a layer, which is higher than a priority of a coefficient corresponding to a spatial domain basis vector/CSI-RS port, which is higher than a priority of a coefficient corresponding to a frequency domain basis vector, wherein the smaller an index of a Doppler domain basis vector in the same layer, the greater the priority of the coefficient; for coefficients at the same position in different layers, the smaller a number of layers, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient.

8. The method according to claim 7, wherein, in response to the priority of the coefficient of the layer being higher than the priority of the coefficient corresponding to the spatial domain basis vector/CSI-RS port, which is higher than the priority of the coefficient corresponding to the frequency domain basis vector, which is higher than the priority of the coefficient corresponding to the Doppler domain basis vector, the priority of the coefficient is determined based on following formulas:

$$\mathrm{Pri}\left(l,i,f,d\right) = 2 \cdot L \cdot v \cdot M_v \cdot d + 2 \cdot L \cdot v \cdot \pi\left(f\right) + v \cdot i + l \; ;$$

or

$$\mathrm{Pri}\left(l,i,f,d\right) = K_1 \cdot v \cdot M \cdot d + K_1 \cdot v \cdot f + v \cdot i + l \; ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $v$ represents a transmission rank, $M_v$ represents a number of frequency domain basis vectors, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $K_1$ represents a number of CSI-RS ports selected by the terminal, and $M$

represents a number of frequency domain basis vectors.

9. The method according to claim 7, wherein, in response to the priority of the coefficient of the layer being higher than the priority of the coefficient corresponding to the spatial domain basis vector/CSI-RS port, which is higher than the priority of the coefficient corresponding to the Doppler domain basis vector, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + 2 \cdot L \cdot v \cdot d + v \cdot i + l \; ;$$

or

$$\mathrm{Pri}(l,i,f,d) = K_1 \cdot v \cdot Q \cdot f + K_1 \cdot v \cdot d + v \cdot i + l \; ;$$

or

$$\mathrm{Pri}(l,i,f,d) = 2 \cdot L \cdot v \cdot Q \cdot \pi(f) + 2 \cdot L \cdot v \cdot \pi(d) + v \cdot i + l \; ;$$

or

$$\mathrm{Pri}(l,i,f,d) = K_1 \cdot v \cdot Q \cdot f + K_1 \cdot v \cdot \pi(d) + v \cdot i + l \; ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

10. The method according to claim 7, wherein, in response to the priority of the coefficient of the layer being higher than the priority of the coefficient corresponding to the Doppler domain basis vector, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + v \cdot Q \cdot i + v \cdot d + l \; ;$$

or

$$\mathrm{Pri}(l,i,f,d) = K_1 \cdot v \cdot Q \cdot f + v \cdot Q \cdot i + v \cdot d + l \; ;$$

or

$$\mathrm{Pri}(l,i,f,d) = 2 \cdot L \cdot v \cdot Q \cdot \pi(f) + v \cdot Q \cdot i + v \cdot \pi(d) + l \; ;$$

or

$$\mathrm{Pri}(l,i,f,d) = K_1 \cdot v \cdot Q \cdot f + v \cdot Q \cdot i + v \cdot \pi(d) + l \; ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

11. The method according to claim 7, wherein, in response to the priority of the coefficient corresponding to the Doppler domain basis vector being higher than the priority of the coefficient of the layer, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + v \cdot Q \cdot i + Q \cdot l + d \; ;$$

or

$$\mathrm{Pri}(l,i,f,d) = K_1 \cdot v \cdot Q \cdot f + v \cdot Q \cdot i + Q \cdot l + d \; ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index of the frequency domain basis vector to $N_3$, $N_3$ represents a number of candidate frequency domain basis vectors, and $K_1$ represents a number of CSI-RS ports selected by the terminal.

12. A method for reporting channel status information (CSI), performed by a network device and comprising:

    configuring a codebook parameter for a terminal, the codebook parameter comprising one or more Doppler domain basis vectors and/or a length of a Doppler domain basis vector; and
    receiving CSI sent by the terminal.

13. The method according to claim 12, wherein the CSI comprises first information, and the first information comprises at least one of:

    rank indication information;
    channel quality indication information; or
    number indication information of non-zero coefficients of all layers.

14. The method according to claim 12 or 13, wherein the CSI comprises second information, the second information comprises multiple information groups, and different information groups in the multiple information groups correspond to different priorities;

one or more information groups with lower priorities in the second information are discarded in response to uplink resources allocated by the network device being unable to transmit all information comprised in the CSI.

15. The method according to claim 14, wherein the second information comprises a first information group, and the first information group comprises at least one of:

indication information of a Doppler domain basis vector;
spatial domain basis vector indication information or channel status information-reference signal (CSI-RS) port selection indication information in each polarization direction;
indication information of a strongest coefficient at each layer; or
indication information of a frequency domain basis vector.

16. The method according to claim 15, wherein the second information further comprises a second information group, and the second information group comprises at least one of:

indication information of a Doppler domain basis vector;
indication information of a frequency domain basis vector;

position indication information of $vB - \left\lfloor \dfrac{K^{NZ}}{2} \right\rfloor$ bits of high-priority non-zero coefficients;

amplitude and phase quantization information corresponding to $\max\left(0, \left\lceil \dfrac{K^{NZ}}{2} \right\rceil - v\right)$ high-priority non-zero coefficients; or

coefficients and coefficient indication information for $v$ transmission layers corresponding to a first Doppler domain basis vector or $\left\lfloor \dfrac{Q}{2} \right\rfloor$ or $\left\lceil \dfrac{Q}{2} \right\rceil$ Doppler domain basis vectors,

where $v$ represents a transmission rank, $B$ represents an indication size of non-zero coefficients at each layer, $K^{NZ}$ represents a number of non-zero coefficients corresponding to all layers, and $Q$ represents a number of Doppler domain basis vectors.

17. The method according to claim 16, wherein the second information further comprises a third information group, and the third information group comprises at least one of:

indication information of a Doppler domain basis vector;

position indication information of $\left\lfloor \dfrac{K^{NZ}}{2} \right\rfloor$ bits of low-priority non-zero coefficients;

amplitude and phase quantization information corresponding to $\min\left(K^{NZ} - v, \left\lceil \dfrac{K^{NZ}}{2} \right\rceil\right)$ low-priority non-zero coefficients;

coefficients and coefficient indication information for $v$ transmission layers corresponding to Doppler domain basis vectors except the first Doppler domain basis vector; or
a combination coefficient and coefficient indication information for $v$ transmission layers corresponding to

$Q - \left\lfloor \dfrac{Q}{2} \right\rfloor$ or $Q - \left\lceil \dfrac{Q}{2} \right\rceil$ Doppler domain basis vectors,

where $K^{NZ}$ represents the number of non-zero coefficients corresponding to all layers, and $Q$ represents the number of Doppler domain basis vectors.

18. The method according to claim 12, wherein a sorting of priorities of coefficients in the CSI comprises:

a priority of a coefficient of a layer being higher than a priority of a coefficient corresponding to a spatial domain basis vector/CSI-RS port, which is higher than a priority of a coefficient corresponding to a frequency domain basis vector, which is higher than a priority of a coefficient corresponding to a Doppler domain basis vector, wherein for coefficients at the same position in different layers, the smaller a number of layers, the greater the priority of the coefficient; the smaller an index of a spatial domain basis vector/CSI-RS port in the same layer, the greater the priority of the coefficient; the smaller an index of a frequency domain basis vector/a value of a first preset algorithm corresponding to the index of the frequency domain basis vector in the same layer, the greater the priority of the coefficient; and the smaller an index of a Doppler domain basis vector in the same layer, the greater the priority of the coefficient; or

a priority of a coefficient of a layer being higher than a priority of a coefficient corresponding to a spatial domain basis vector/CSI-RS port, which is higher than a priority of a coefficient corresponding to a Doppler domain basis vector, which is higher than a priority of a coefficient corresponding to a frequency domain basis vector, wherein for coefficients at the same position in different layers, the smaller a number of layers, the greater the priority of the coefficient; the smaller an index of a spatial domain basis vector/CSI-RS port in the same layer, the greater the priority of the coefficient; the smaller an index of a Doppler domain basis vector/a value of a second preset algorithm corresponding to the index of the Doppler domain basis vector in the same layer, the greater the priority of the coefficient; and the smaller an index of a frequency domain basis vector/a value of a first preset algorithm corresponding to the index of the frequency domain basis vector in the same layer, the greater the priority of the coefficient; or

a priority of a coefficient of a layer being higher than a priority of a coefficient corresponding to a Doppler domain basis vector, which is higher than a priority of a coefficient corresponding to a spatial domain basis vector/CSI-RS port, which is higher than a priority of a coefficient corresponding to a frequency domain basis vector, wherein for coefficients at the same position in different layers, the smaller a number of layers, the greater the priority of the coefficient; the smaller an index of a Doppler domain basis vector/a value of a second preset algorithm corresponding to the index of the Doppler domain basis vector in the same layer, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient; or

a priority of a coefficient corresponding to a Doppler domain basis vector being higher than a priority of a coefficient of a layer, which is higher than a priority of a coefficient corresponding to a spatial domain basis vector/CSI-RS port, which is higher than a priority of a coefficient corresponding to a frequency domain basis vector, wherein the smaller an index of a Doppler domain basis vector in the same layer, the greater the priority of the coefficient; for coefficients at the same position in different layers, the smaller a number of layers, the greater the priority of the coefficient; the smaller an index of a spatial domain basis vector/CSI-RS port in the same layer, the greater the priority of the coefficient; and the smaller an index of a frequency domain basis vector/a value of a first preset algorithm corresponding to the index of the frequency domain basis vector in the same layer, the greater the priority of the coefficient.

19. The method according to claim 18, wherein, in response to the priority of the coefficient of the layer being higher than the priority of the coefficient corresponding to the spatial domain basis vector/CSI-RS port, which is higher than the priority of the coefficient corresponding to the frequency domain basis vector, which is higher than the priority of the coefficient corresponding to the Doppler domain basis vector, the priority of the coefficient is determined based on following formulas:

$$\mathrm{Pri}\left(l,i,f,d\right) = 2 \cdot L \cdot v \cdot M_v \cdot d + 2 \cdot L \cdot v \cdot \pi\left(f\right) + v \cdot i + l \; ;$$

or

$$\mathrm{Pri}\left(l,i,f,d\right) = K_1 \cdot v \cdot M \cdot d + K_1 \cdot v \cdot f + v \cdot i + l \; ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $v$ represents a transmission rank, $M_v$

represents a number of frequency domain basis vectors, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $K_1$ represents a number of CSI-RS ports selected by the terminal, and $M$ represents a number of frequency domain basis vectors.

20. The method according to claim 18, wherein, in response to the priority of the coefficient of the layer being higher than the priority of the coefficient corresponding to the spatial domain basis vector/CSI-RS port, which is higher than the priority of the coefficient corresponding to the Doppler domain basis vector, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + 2 \cdot L \cdot v \cdot d + v \cdot i + l ;$$

or

$$\mathrm{Pri}(l,i,f,d) = K_1 \cdot v \cdot Q \cdot f + K_1 \cdot v \cdot d + v \cdot i + l ;$$

or

$$\mathrm{Pri}(l,i,f,d) = 2 \cdot L \cdot v \cdot Q \cdot \pi(f) + 2 \cdot L \cdot v \cdot \pi(d) + v \cdot i + l ;$$

or

$$\mathrm{Pri}(l,i,f,d) = K_1 \cdot v \cdot Q \cdot f + K_1 \cdot v \cdot \pi(d) + v \cdot i + l ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$ represents an index mapped from the index $d$ of the Doppler domain basis vector to $N_4$, $N_4$ represents a number of candidate Doppler domain basis vectors, and $K_1$ represents a number of CSI-RS ports selected by the terminal.

21. The method according to claim 18, wherein, in response to the priority of the coefficient of the layer being higher than the priority of the coefficient corresponding to the Doppler domain basis vector, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + v \cdot Q \cdot i + v \cdot d + l ;$$

or

$$\mathrm{Pri}(l,i,f,d) = K_1 \cdot v \cdot Q \cdot f + v \cdot Q \cdot i + v \cdot d + l ;$$

or

$$\mathrm{Pri}(l,i,f,d) = 2 \cdot L \cdot v \cdot Q \cdot \pi(f) + v \cdot Q \cdot i + v \cdot \pi(d) + l ;$$

or

$$\mathrm{Pri}(l,i,f,d) = K_1 \cdot v \cdot Q \cdot f + v \cdot Q \cdot i + v \cdot \pi(d) + l ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, $\pi(d) = \min\left(2 \cdot n_{4,l}^{(d)}, 2 \cdot \left(N_4 - n_{4,l}^{(d)}\right) - 1\right)$, $n_{4,l}^{(d)}$, represents an index mapped from the index $d$ of the Doppler domain basis vector to $N_4$, $N_4$ represents a number of candidate Doppler domain basis vectors, and $K_1$ represents a number of CSI-RS ports selected by the terminal.

22. The method according to claim 18, wherein, in response to the priority of the coefficient corresponding to the Doppler domain basis vector being higher than the priority of the coefficient of the layer, which is higher than the priority of the coefficient corresponding to the spatial domain basis vector/CSI-RS port, which is higher than the priority of the coefficient corresponding to the frequency domain basis vector, the priority of the coefficient is determined based on following formulas:

$$\mathrm{Pri}(l,i,f,d) = 2 \cdot L \cdot v \cdot Q \cdot \pi(f) + v \cdot Q \cdot i + Q \cdot l + d ;$$

or

$$\mathrm{Pri}(l,i,f,d) = K_1 \cdot v \cdot Q \cdot f + v \cdot Q \cdot i + Q \cdot l + d ,$$

where $l$ represents the number of layers, $i$ represents the index of the spatial domain basis vector/CSI-RS port, $f$ represents the index of the frequency domain basis vector, $d$ represents the index of the Doppler domain basis vector, $L$ represents a number of spatial domain basis vectors in a polarization direction, $Q$ represents a number of Doppler domain basis vectors, $v$ represents a transmission rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the frequency domain basis vector to $N_3$, $N_3$ represents a number of candidate frequency domain basis vectors, and $K_1$ represents a number of CSI-RS ports selected by the terminal.

23. An apparatus for reporting channel status information (CSI), comprising:

a sending module configured to send CSI to a network device based on a codebook parameter in response to the terminal being configured with the codebook parameter,
wherein the codebook parameter comprises one or more Doppler domain basis vectors and/or a length of a Doppler domain basis vector.

24. An apparatus for reporting channel status information (CSI), comprising:

a configuring module configured to configure a codebook parameter for a terminal, the codebook parameter comprising one or more Doppler domain basis vectors and/or a length of a Doppler domain basis vector; and
a receiving module configured to receive CSI sent by the terminal.

25. A device for reporting channel status information (CSI), comprising:

a processor; and
a memory for storing instructions executable by the processor;
wherein the processor is configured to perform the method according to any one of claims 1 to 11.

26. A device for reporting channel status information (CSI), comprising:

a processor; and
a memory for storing instructions executable by the processor;
wherein the processor is configured to perform the method according to any one of claims 12 to 22.

27. A storage medium having stored therein instructions that, when executed by a processor of a terminal, cause the terminal to perform the method according to any one of claims 1 to 11.

28. A storage medium having stored therein instructions that, when executed by a processor of a network device, cause the network device to perform the method according to any one of claims 12 to 22.

FIG. 1

S11

sending CSI to a network device based on a codebook parameter in response to the terminal being configured with the codebook parameter

FIG. 2

$f=0$ • • • $f=3$ $f=0$ • • • $f=3$

$i=0$

$i=3$

position of strongest coefficient

coefficients corresponding to first Doppler domain basis vector

coefficients corresponding to second Doppler domain basis vector

FIG. 3

$f=0$　$f=1$　$f=2$　$f=3$

$i=0$

$i=3$

position of strongest
coefficient

coefficients corresponding to two
Doppler domain basis vectors

FIG. 4

configuring a codebook parameter for a terminal　　S21

receiving CSI sent by the terminal　　S22

FIG. 5

sending module　　101

FIG. 6

configuring module　　201

receiving module　　202

FIG. 7

FIG. 8

<u>400</u>

FIG. 9

## INTERNATIONAL SEARCH REPORT

| | International application No. |
|---|---|
| | **PCT/CN2023/072222** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L H04B H04W

Documentation searched other than minimum documentation to the extent that such documents are included in the fields searched

Electronic data base consulted during the international search (name of data base and, where practicable, search terms used)

CNTXT: CNKI: ENTXTC; DWPI; IEEE; 3GPP: 码本参数, 信道状态信息, CSI, 多普勒域, 基向量, 报告, 上报, codebook parameter, channel state information, doppler domain, DD, basis vector, report+

**C. DOCUMENTS CONSIDERED TO BE RELEVANT**

| Category* | Citation of document, with indication, where appropriate, of the relevant passages | Relevant to claim No. |
|---|---|---|
| X | US 2022006496 A1 (LG ELECTRONICS INC.) 06 January 2022 (2022-01-06) description, paragraphs [0806]-[0846], and claims 1-17 | 1-3, 12-14, 23-28 |
| X | CN 109391407 A (CHINA ACADEMY OF TELECOMMUNICATIONS TECHNOLOGY) 26 February 2019 (2019-02-26) description, paragraphs [0005]-[0145] | 1-3, 12-14, 23-28 |
| A | CN 111726154 A (CHINA ACADEMY OF TELECOMMUNICATIONS TECHNOLOGY) 29 September 2020 (2020-09-29) entire document | 1-28 |
| A | US 2022295499 A1 (SAMSUNG ELECTRONICS CO., LTD.) 15 September 2022 (2022-09-15) entire document | 1-28 |
| A | NOKIA et al. "Enhanced Type II codebook for CSI feedback" *3GPP TSG RAN WG1 Meeting #96b, R1-1905063*, 12 April 2019 (2019-04-12), entire document | 1-28 |

☐ Further documents are listed in the continuation of Box C.     ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **27 September 2023** | **08 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| | | International application No. |
|---|---|---|
| | | **PCT/CN2023/072222** |

| Patent document cited in search report | | | Publication date (day/month/year) | Patent family member(s) | | | Publication date (day/month/year) |
|---|---|---|---|---|---|---|---|
| US | 2022006496 | A1 | 06 January 2022 | WO | 2020091544 | A1 | 07 May 2020 |
| CN | 109391407 | A | 26 February 2019 | WO | 2019029289 | A1 | 14 February 2019 |
| CN | 111726154 | A | 29 September 2020 | WO | 2020186871 | A1 | 24 September 2020 |
| | | | | KR | 20210138749 | A | 19 November 2021 |
| | | | | EP | 3944511 | A1 | 26 January 2022 |
| | | | | US | 2022149909 | A1 | 12 May 2022 |
| US | 2022295499 | A1 | 15 September 2022 | WO | 2022191677 | A1 | 15 September 2022 |

Form PCT/ISA/210 (patent family annex) (July 2022)